# EUROPEAN PATENT SPECIFICATION

(11) **EP 4 414 412 B1**
(45) Date of publication and mention of the grant of the patent: **09.09.2026**
(21) Application number: 22878628.1
(22) Date of filing: 07.10.2022
(51) Int. Cl.: C08J 3/205, C08L 29/04, C08F 216/06, C08J 5/18, C08J 3/14, C08F 218/08

(54) **PELLET CONTAINING ETHYLENE-VINYL ALCOHOL COPOLYMER AND METHOD FOR PRODUCING SAME**
PELLET MIT ETHYLEN-VINYLALKOHOL-COPOLYMER UND VERFAHREN ZUR HERSTELLUNG DAVON
PASTILLE CONTENANT UN COPOLYMÈRE ÉTHYLÈNE-ALCOOL VINYLIQUE ET PROCÉDÉ DE PRODUCTION DE CETTE DERNIÈRE

(30) Priority: 08.10.2021 JP 2021166524
(43) Date of publication of application: 14.08.2024
(73) Proprietor: Kuraray Co., Ltd., Kurashiki-shi, Okayama 710-0801 (JP)
(72) Inventor: HOSHIKA, Rina, Kurashiki-shi, Okayama 713-8550 (JP); KURASHIMA, Erika, Tokyo 100-0004 (JP); SAKANO, Takeshi, Kurashiki-shi, Okayama 713-8550 (JP)
(74) Representative: Müller-Boré & Partner Patentanwälte PartG mbB
(86) International application number: PCT/JP2022/037692
(87) International publication number: WO 2023/058761

(56) References cited:
- WO-A1-2010/001471
- WO-A1-2018/124295
- WO-A1-2019/194318
- JP-A- 2000 265 025
- JP-A- 2002 284 887
- JP-A- 2008 208 327
- JP-A- 2019 182 947
- JP-A- 2022 016 088
- US-A1- 2017 183 426
- US-A1- 2019 315 933
- US-A1- 2019 345 309

## Description

### TECHNICAL FIELD

The present invention relates to a pellet containing an ethylene-vinyl alcohol copolymer and a method for producing the same.

### BACKGROUND ART

An ethylene-vinyl alcohol copolymer (hereinafter, sometimes abbreviated as "EVOH") is excellent in gas barrier properties, transparency, aroma retention property, solvent resistance, oil resistance and the like, and taking advantage of such properties, has been used in a wide variety of applications including various packaging such as a food packaging container, a pharmaceutical packaging container, an industrial chemical packaging container, an agrochemical packaging container; and a fuel container. For producing such a molded article, EVOH is often melt-molded and then subjected to secondary processing. For example, it is widely practiced to stretch a film or sheet containing an EVOH layer aiming at improving its mechanical strength, or to thermoform a film or sheet containing an EVOH layer for forming a container shape.

Furthermore, in recent years, there has been an increasing demand for stretching with a higher stretch ratio and for producing a molded article with a deeper-drawn shape by thermoforming. Furthermore, since EVOH is a resin with a high elastic modulus, there is an increasing demand for a more flexible resin.

For these reasons, there is a need for a resin having improved secondary processability and flexibility with keeping EVOH's inherent properties such as gas barrier properties, transparency, aroma retention property, solvent resistance, and oil resistance as much as possible.

Patent Reference No. 1 has described a modified EVOH with 2-methylene-1,3-propanediol units being copolymerized, which is prepared by copolymerizing ethylene, vinyl acetate and 2-methylene-1,3-propanediol diacetate and saponifying the copolymer. It is also described that the modified EVOH has excellent barrier properties, flexibility, and secondary processability. However, for example, when the obtained molded articles such as films and sheets are stacked or rolled for storage, there is a problem of blocking where the molded articles stick to each other.

Patent Reference No. 2 has described a modified EVOH containing an antiblocking agent which are inorganic particles with an average particle size of more than 0.3 µm and 20 µm or less. However, although blocking of the film made of the modified EVOH was improved, blocking of pellets each other was insufficiently improved.

### PRIOR ART REFERENCES

### Patent References

Patent Reference No. 1: WO 2014/024912 A1
Patent Reference No. 2: JP 2019-182947 A

### SUMMARY OF THE INVENTION

### PROBLEMS TO BE SOLVED BY THE INVENTION

To solve the above problems, an objective of the present invention is to provide a pellet containing EVOH which is excellent in secondary processability, flexibility and blocking resistance, and a method for producing the same.

### MEANS FOR SOLVING THE PROBLEMS

As a result of intensive studies aiming at improving flexibility and blocking resistance of a pellet containing an EVOH, the inventors have achieved solution of the above problems by forming, on the surface of the pellet, projections containing particles covered with the EVOH and forming given recesses in the lateral surface or the cut surface of the pellet, or the like.

The above problems are solved by providing a pellet containing an EVOH having a degree of saponification of 90 mol% or more and particles, which is cut into a cylindrical shape, wherein the pellet has a melting enthalpy ΔHm (J/g) of 65 (J/g) or less; the pellet contains 5 ppm to 5,000 ppm of particles with an average particle size R of 1 µm to 30 µm; the pellet has a length L (mm); recesses are formed in the lateral surface or the cut surface of the pellet; in cases where the recesses are formed in the lateral surface, the number n of the recesses is 2 to 5; at least in one cross-section perpendicular to a flow direction of the pellet positioned within L/4 (mm) from the gravity center of the pellet, distances α1 to αn respectively from the gravity center of the cross-section to the edges of the recesses formed in the lateral surface and distances β1 to βn respectively from the gravity center of the cross-section to the bottoms of the recesses formed in the lateral surface satisfy Formula (1): $\left(β1+β2⋯+βn\right) / \left(α1+α2⋯+αn\right) \leq 0.8$ in cases where the recesses are formed in the cut surface, a ratio D/L of a depth D (mm) of the recesses formed in the cut surface to a length L (mm) of the pellet is 0.1 or more; a projection having a height H of 0.1 µm to 15 µm is formed on the surface of the pellet; the projection contains the particles and the particles are covered with the EVOH.

Here, it is preferable that the melting enthalpy ΔHm (J/g) of the pellet is 64 (J/g) or less. It is preferable that the EVOH is represented by Formula (I): 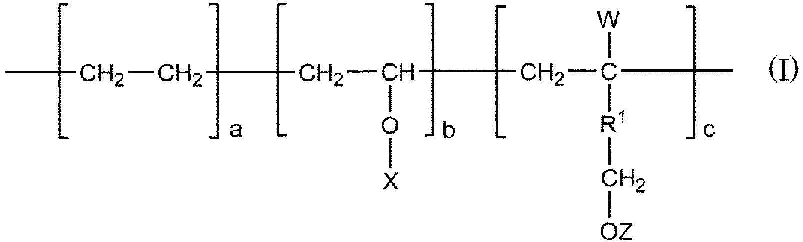
wherein W represents a hydrogen atom, a methyl group or a group represented by R²-OY; X, Y and Z are each independently a hydrogen atom, a formyl group or an alkanoyl group having 2 to 10 carbon atoms; R¹ and R² represent each independently a single bond, an alkylene group having 1 to 9 carbon atoms or an alkyleneoxy group having 1 to 9 carbon atoms; the alkylene group and the alkyleneoxy group can contain a hydroxy group, an alkoxy group or a halogen atom; and
contents (mol%) of a, b and c based on the total monomer units satisfy Formulas (2) to (4): $24 \leq a \leq 55$ $0.01 \leq c \leq 10$ $\left[100-\left(a+c\right)\right] \times 0.9 \leq b \leq \left[100-\left(a+c\right)\right]$

It is preferable that a and c satisfy Formula (5). $29 \leq 1.2 a + 8 c \leq 100$

It is also preferable that in Formula (I), R¹ is a single bond and W is a hydroxymethyl group.

It is also preferable that the melting enthalpy ΔHm (J/g) of the pellet and a content A (ppm) of the particles satisfy Formula (6). $1 \leq ΔHm / 100 + A / 500 \leq 10$

It is also preferable that the average particle size R (µm) of the particles and the height H (µm) of the projection satisfy Formula (7). $0.1 \leq H / R \leq 0.9$

It is also preferable that the particles are inorganic oxide particles. It is more preferable that the inorganic oxide particles are silicon oxide particles or metal oxide particles.

It is also preferable that the particles are organic compound particles comprising at least one selected from the group consisting of a saturated fatty acid amide, an unsaturated fatty acid amide, a bis-fatty acid amide and a fatty acid metal salt.

The above problems are also solved by providing a method for producing the pellet, comprising the step of cutting a strand containing the EVOH, the particles and water to give a cylindrical water-containing pellet; and the step of drying the water-containing pellet to form the recesses.

The above problems are also solved by providing a pellet containing a modified EVOH and particles, which is cut into a cylindrical shape, wherein the pellet contains 5 ppm to 5,000 ppm of particles with an average particle size R of 1 µm to 30 µm; the modified EVOH is represented by Formula (I): 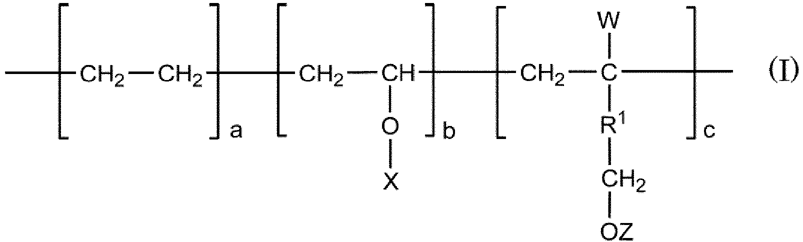
wherein W represents a hydrogen atom, a methyl group or a group represented by R²-OY; X, Y and Z are each independently a hydrogen atom, a formyl group or an alkanoyl group having 2 to 10 carbon atoms; R¹ and R² represent each independently a single bond, an alkylene group having 1 to 9 carbon atoms or an alkyleneoxy group having 1 to 9 carbon atoms; the alkylene group and the alkyleneoxy group can contain a hydroxy group, an alkoxy group or a halogen atom; and
contents (mol%) of a, b and c based on the total monomer units satisfy Formulas (2) to (4): $24 \leq a \leq 55$ $0.01 \leq c \leq 10$ $\left[100-\left(a+c\right)\right] \times 0.9 \leq b \leq \left[100-\left(a+c\right)\right]$
and a degree of saponification (DS) as defined by Formula (8): 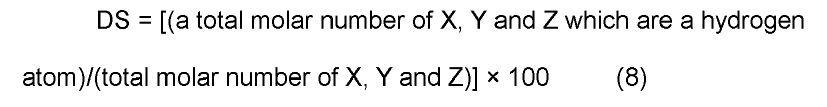 DS = [(a total molar number of X, Y and Z which are a hydrogen atom)/(total molar number of X, Y and Z)] × 100 (8) is 90 mol% or more;
the pellet has a length L (mm); recesses are formed in the lateral surface or the cut surface of the pellet; in cases where the recesses are formed in the lateral surface, the number n of the recesses is 2 to 5; at least in one cross-section perpendicular to a flow direction of the pellet positioned within L/4 (mm) from the gravity center of the pellet, distances α1 to αn respectively from the gravity center of the cross-section to the edges of the recesses formed in the lateral surface and distances β1 to βn respectively from the gravity center of the cross-section to the bottoms of the recesses formed in the lateral surface satisfy Formula (1): $\left(β1+β2⋯+βn\right) / \left(α1+α2⋯+αn\right) \leq 0.8$
in cases where the recesses are formed in the cut surface, a ratio D/L of a depth D (mm) of the recesses formed in the cut surface to a length L (mm) of the pellet is 0.1 or more; a projection having a height H of 0.1 µm to 15 µm is formed on the surface of the pellet; and the projection contains the particles and the particles are covered with the EVOH.

### EFFECTS OF THE INVENTION

A pellet of the present invention can provide a molded article which is excellent in blocking resistance, secondary processability and flexibility. Furthermore, the pellet is excellent in extrusion stability. The pellet can be suitably used for a barrier material or the like. Such a pellet can be readily produced in accordance with the production method of the present invention.

### BRIEF DESCRIPTION OF THE DRAWINGS

FIG. 1 is an appearance photograph of a lateral surface of a pellet obtained in Example 1.
FIG. 2 is an electron microgram of a cross-section cut perpendicularly to a flow direction of the pellet positioned within L/4 (mm) from the gravity center of the pellet obtained in Example 1.
FIG. 3 is an exemplary appearance photograph of a lateral surface of the pellet of the present invention in which recesses are formed in the cut surface.
FIG. 4 is an electron microgram of the surface of the pellet obtained in Example 1.

### MODES FOR CARRYING OUT THE INVENTION

A pellet of the present invention is a pellet which contains an EVOH having a degree of saponification of 90 mol% or more and particles, which is cut into a cylindrical shape, wherein the pellet has a melting enthalpy ΔHm (J/g) of 65 (J/g) or less; the pellet contains 5 ppm to 5,000 ppm of particles with an average particle size R of 1 µm to 30 µm; the pellet has a length L (mm); recesses are formed in the lateral surface or the cut surface of the pellet; in cases where the recesses are formed in the lateral surface, the number n of the recesses is 2 to 5; at least in one cross-section perpendicular to a flow direction of the pellet positioned within L/4 (mm) from the gravity center of the pellet, distances α1 to αn respectively from the gravity center of the cross-section to the edges of the recesses formed in the lateral surface and distances β1 to βn respectively from the gravity center of the cross-section to the bottoms of the recesses formed in the lateral surface satisfy Formula (1): $\left(β1+β2⋯+βn\right) / \left(α1+α2⋯+αn\right) \leq 0.8$ in cases where the recesses are formed in the cut surface, a ratio D/L of a depth D (mm) of the recesses formed in the cut surface to a length L (mm) of the pellet is 0.1 or more; a projection having a height H of 0.1 µm to 15 µm is formed on the surface of the pellet; the projection contains the particles; and the particles are covered with the EVOH.

A pellet of the present invention is excellent in flexibility and blocking resistance. Furthermore, the pellet is also excellent in extrusion stability. Hitherto, it has been known that a modified EVOH with improved flexibility and the like is provided by copolymerizing predetermined units, but the problem of blocking when it is stored as a roll or the like has existed. Furthermore, a modified EVOH containing an antiblocking agent made of inorganic particles with a predetermined average particle size was also known, but in some cases, the problem of blocking modified EVOH pellets each other has occurred. In contrast, according to the present invention, a projection is formed on the surface of the pellet and the recesses are formed in the lateral surface or the cut surface, so that a contact area between the pellets could be reduced, resulting in improvement in block resistance. Furthermore, with a melting enthalpy ΔHm (J/g) of the pellet being within a predetermined range, flexibility would be improved and the recesses would be easily formed. As a result, both excellent flexibility and blocking resistance can be achieved. Furthermore, reduction of a contact area between the pellets allows for stabilizing a discharge amount during melt extrusion and improving extrusion stability.

The EVOH contained in the pellet of the present invention is generally provided by saponifying an ethylene-vinyl ester copolymer obtained by polymerizing ethylene and a vinyl ester.

It is preferable that a content a (mol%) of ethylene units based on the total monomer units in the EVOH satisfies Formula (2), that is, 24 to 55 mol%. $24 \leq a \leq 55$ If the ethylene unit content a is less than 24 mol%, melt moldability of the EVOH may be deteriorated. The ethylene-unit content a is more preferably 26 mol% or more, further preferably 30 mol% or more. Meanwhile, if the ethylene-unit content a is more than 55 mol%, barrier performance of the EVOH may be insufficient. The ethylene-unit content a is more preferably 52 mol% or less, further preferably 49 mol% or less.

The EVOH contained in the pellets of the present invention has a degree of saponification (DS) of 90 mol% or more. Herein, a degree of saponification is a proportion (mol%) of a molar number of hydroxy groups based on the total molar number of ester groups which can be converted to hydroxy groups by saponification and hydroxy groups in the EVOH. If the degree of saponification (DS) is less than 90 mol%, barrier performance is insufficient and thermal stability of the EVOH is insufficient, leading to tendency to cause gels and hard spots during melt molding. Furthermore, reduction in thermal stability tends to reduce long-run moldability during high temperature molding. The degree of saponification (DS) is preferably 95 mol% or more, more preferably 98 mol% or more, further preferably 99 mol% or more. For achieving particularly excellent barrier performance and thermal stability, the degree of saponification (DS) is preferably 99 mol% or more, more preferably 99.5 mol% or more, further preferably 99.8 mol% or more.

A degree of saponification (DS) can be determined by nuclear magnetic resonance (NMR). The above ethylene-unit content a, and monomer unit contents b and c in a modified EVOH represented by Formula (I) described later can be also determined by NMR.

A melt flow rate (MFR)(190 °C, under a load of 2160 g) of the EVOH is preferably 0.1 to 30 g/10 min, more preferably 0.3 to 25 g/10 min, further preferably 0.5 to 20 g/10 min. When a melting point is around 190 °C or higher than 190 °C, it is measured at multiple temperatures of the melting point or higher under a load of 2160 g, and a reciprocal of an absolute temperature and a logarithm of an MFR are plotted on a horizontal axis and a vertical axis, respectively, in a semilogarithmic graph, and a value extrapolated to 190 °C is determined as an MFR. The MFR of the pellet obtained is preferably within the above range.

The EVOH contained in the pellet of the present invention is not limited to any particular type as long as it has a degree of saponification (DS) within the above range, and is preferably a modified EVOH represented by Formula (I), in which contents (mol%) of a, b and c based on the total monomer units satisfy the above Formula (2) and Formulas (3) and (4) below. This modified EVOH can further improve flexibility and secondary processability because it contains, in addition to ethylene units and vinyl alcohol units, monomer units having a primary hydroxy group (the rightmost monomer units comprising W, Z and R¹ in Formula (I)), so that its crystallinity is lower than an EVOH free from the monomer units. Furthermore, this modified EVOH can reduce deterioration of barrier performance due to reduced crystallinity owing to a strong hydrogen-bonding force of the primary hydroxy group. That is, it can further improve flexibility and secondary processability while minimizing deterioration of barrier performance. Furthermore, since crystallinity of a modified EVOH containing monomer units having the primary hydroxy group is low, a water-containing pellet may tend to nonuniformly shrink.

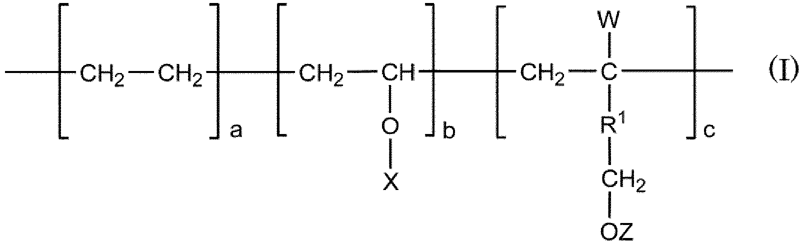

Wherein W represents a hydrogen atom, a methyl group or a group represented by R²-OY; X, Y and Z are each independently a hydrogen atom, a formyl group or an alkanoyl group having 2 to 10 carbon atoms; R¹ and R² each independently represent a single bond, an alkylene group having 1 to 9 carbon atoms or an alkyleneoxy group having 1 to 9 carbon atoms; the alkylene group and the alkyleneoxy group can contain a hydroxy group, an alkoxy group or a halogen atom. $0.01 \leq c \leq 10$ $\left[100-\left(a+c\right)\right] \times 0.9 \leq b \leq \left[100-\left(a+c\right)\right]$

R¹ and R² each independently represent a single bond, an alkylene group having 1 to 9 carbon atoms or an alkyleneoxy group having 1 to 9 carbon atoms. The alkylene group and the alkyleneoxy group can contain a hydroxy group, an alkoxy group or a halogen atom. A carbon number of the alkylene group is preferably 5 or less, more preferably 3 or less, further preferably 2 or less. A carbon number of the alkyleneoxy group is preferably 5 or less, more preferably 3 or less, further preferably 2 or less.

W is preferably a hydrogen atom or a group represented by R²-OH, more preferably a group represented by R²-OH. The group represented by R²-OH is preferably a hydroxyalkyl group (R² is an alkylene group).

Specific examples of the monomer unit having a primary hydroxy group in Formula (I) is monomer units represented by Formulas (II) to (IV), and among these, a structural unit represented by Formula (II) is preferable. 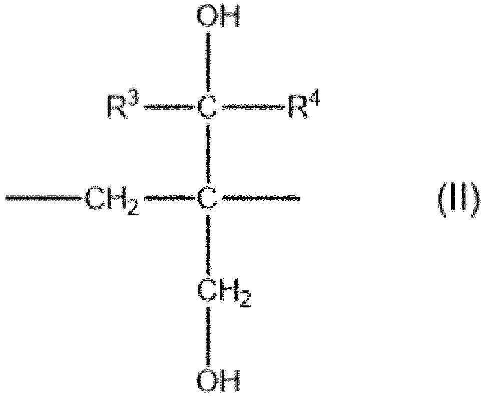
wherein R³ and R⁴ each independently represent a hydrogen atom or an alkyl group having 1 to 8 carbon atoms, and the alkyl group can contain a hydroxy group, an alkoxy group or a halogen atom. 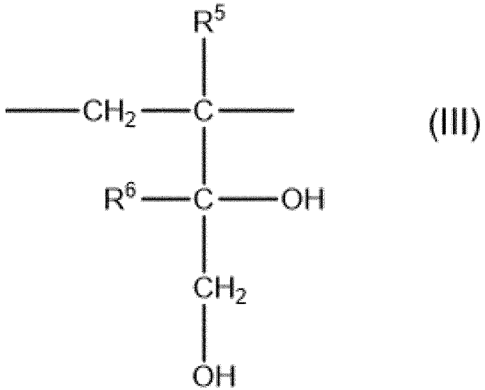
wherein R⁵ is as defined for W in Formula (I); R⁶ represents a hydrogen atom or an alkyl group having 1 to 8 carbon atoms, and the alkyl group can contain a hydroxy group, an alkoxy group or a halogen atom. 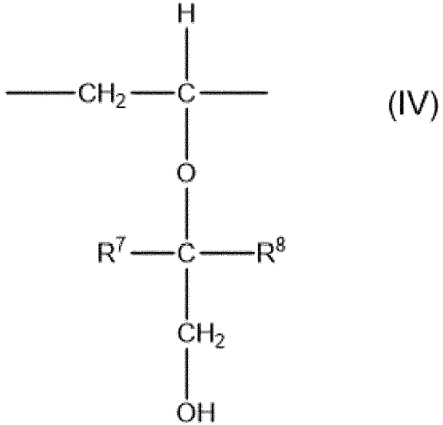
wherein R⁷ and R⁸ each independently represent a hydrogen atom, an alkyl group having 1 to 8 carbon atoms, a cycloalkyl group having 3 to 8 carbon atoms or a hydroxy group, and the alkyl group and the cycloalkyl group can contain a hydroxy group, an alkoxy group or a halogen atom.

In Formula (I), it is preferable that: (1) R¹ is a single bond and W is a hydroxymethyl group (R³ and R⁴ in Formula (II) are a hydrogen atom); (2) R¹ is a hydroxymethylene group and W is a hydrogen atom (R⁵ and R⁶ are a hydrogen atom in Formula (III)); or (3) R¹ is a methylmethyleneoxy group and W is a hydrogen atom (in Formula (IV), one of R⁷ and R⁸ is a methyl group, and other is a hydrogen atom). Among these, (1) is preferable.

In Formula (I), X, Y and Z each independently represent a hydrogen atom, a formyl group or an alkanoyl group having 2 to 10 carbon atoms. When X, Y or Z is a hydrogen atom, Formula (I) has a hydroxy group, and when X, Y or Z is a formyl group or an alkanoyl group, Formula (I) has an ester group. The alkanoyl group is preferably an alkanoyl group having 2 to 5 carbon atoms, more preferably an acetyl group, a propanoyl group, a butanoyl group and the like, further preferably an acetyl group. Any of X, Y and Z is preferably a hydrogen atom, or a mixture containing a hydrogen atom.

A monomer unit containing X can be generally obtained by saponifying a vinyl ester. Therefore, X is preferably a mixture of a hydrogen atom and a formyl group or an alkanoyl group having 2 to 10 carbon atoms. In the light of availability of a monomer (vinyl acetate) and a production cost, X is preferably a mixture of a hydrogen atom and an acetyl group.

A monomer unit containing Y and Z can be prepared by copolymerizing a monomer having an ester group such as an unsaturated monomer having a 1,3-diester structure, followed by saponification, or by copolymerizing a monomer having a hydroxy group such as an unsaturated monomer having a 1,3-diol structure as it is. Therefore, both Y and Z can be a hydrogen atom alone, or a mixture of a hydrogen atom and a formyl group or an alkanoyl group having 2 to 10 carbon atoms, more preferably a mixture of a hydrogen atom and an acetyl group.

In Formula (I), c is a content (mol%) of monomer units having a primary hydroxy group at the right end based on the total monomer units in the modified EVOH, which is preferably 0.01 to 10 mol%. If c is less than 0.01 mol%, moldability and secondary processability of the modified EVOH may be insufficient. c is more preferably 0.05 mol% or more, further preferably 0.1 mol% or more, particularly preferably 0.5 mol% or more. If c is more than 10 mol%, barrier performance of the modified EVOH may be deteriorated. c is more preferably 5 mol% or less.

In Formula (I), b is a content (mol%) of vinyl alcohol units and vinyl ester units based on the total monomer units in the modified EVOH. Preferably, it satisfies Formula (4). Satisfying Formula (4) means that in the modified EVOH, 90 % or more of monomer units other than ethylene units and monomer units having a primary hydroxy group at the right end of Formula (I) are vinyl alcohol units and vinyl ester units. When it does not satisfy Formula (4), gas barrier performance may be insufficient. More preferably, it satisfies Formula (4'), more preferably satisfies Formula (4").$\left[100-\left(a+c\right)\right] \times 0.95 \leq b \leq \left[100-\left(a+c\right)\right]$ $\left[100-\left(a+c\right)\right] \times 0.98 \leq b \leq \left[100-\left(a+c\right)\right]$

As described above, the EVOH contained in the pellet of the present invention has a degree of saponification (DS) of 90 mol% or more. When the EVOH is represented by Formula (I), a degree of saponification (DS) is determined by Formula (8). 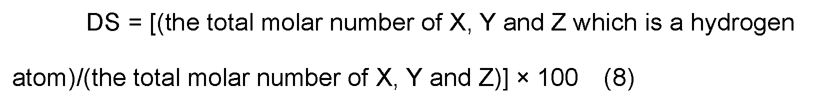 DS = [(the total molar number of X, Y and Z which is a hydrogen atom)/(the total molar number of X, Y and Z)] × 100 (8)

In the formula, "the total molar number of X, Y and Z which is a hydrogen atom" is a molar number of hydroxy groups, and "the total molar number of X, Y and Z" is the total molar number of hydroxy groups and ester groups.

The modified EVOH represented by Formula (I) is generally a random copolymer. Results of NMR spectrometry and melting point measurement confirms that it is a random copolymer.

It is preferable that a and c in Formula (I) satisfy Formula (5). If "1.2a + 8c" is less than 29, moldability and secondary processability of the modified EVOH may be insufficient. "1.2a + 8c" is preferably 40 or more, more preferably 50 or more, further preferably 55 or more. If "1.2a + 8c" is more than 100, barrier performance of the modified EVOH may be deteriorated. "1.2a + 8c" is preferably 90 or less, more preferably 85 or less, further preferably 80 or less. $29 \leq 1.2 a + 8 c \leq 100$

The EVOH contained in the pellet can be a mixture of the modified EVOH represented by Formula (I) and an unmodified EVOH. In the light of reducing cost, a mass ratio of the modified EVOH to the unmodified EVOH (modified EVOH/unmodified EVOH)is preferably 1/9 to 9/1. In the light of more prominent effect of adding the modified EVOH, the mass ratio (modified EVOH/unmodified EVOH) is preferably more than 9/1, and more preferably the unmodified EVOH is substantially absent.

When the EVOH contained in the pellet is a mixture of different two or more modified EVOHs or a mixture of the modified EVOH and the unmodified EVOH, a content of each monomer unit, a degree of saponification and an MFR is to be an average calculated from a blending mass ratio.

There are no particular restrictions to a method for producing the EVOH. For example, a modified EVOH comprising a monomer unit represented by Formula (II) as a monomer unit having a primary hydroxy group at the right end of Formula (I) is prepared by a method comprising radical polymerizing ethylene, a vinyl ester represented by Formula (V) and an unsaturated monomer represented by Formula (VI) to give a modified ethylene-vinyl ester copolymer represented by Formula (VII), and then saponifying it. There will be described the production method. Here, an unmodified EVOH can be prepared in the same way as this method except that the unsaturated monomer represented by Formula (VI) is not used.

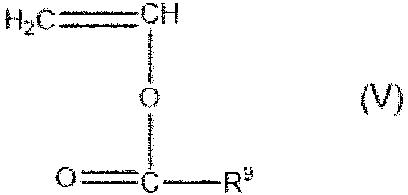

In Formula (V), R⁹ represents a hydrogen atom or an alkyl group having 1 to 9 carbon atoms. A carbon number of the alkyl group is preferably 1 to 4. Examples of the vinyl ester represented by Formula (V) include vinyl formate, vinyl acetate, vinyl propionate, vinyl butyrate, vinyl isobutyrate, vinyl pivalate, vinyl versatate and vinyl caproate. Vinyl acetate is more preferable in the light of economy.

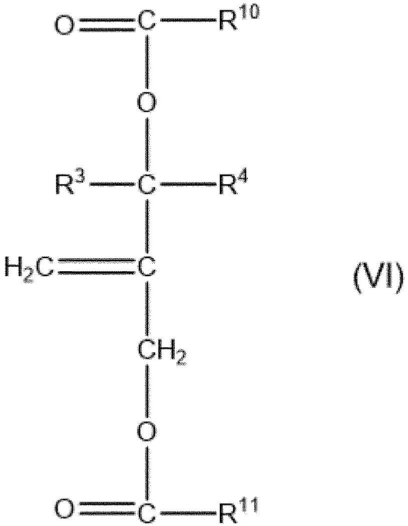

In Formula (VI), R³ and R⁴ are as described for Formula (II). R¹⁰ and R¹¹ each independently represent a hydrogen atom and an alkyl group having 1 to 9 carbon atoms. A carbon number of the alkyl group is preferably 1 to 4. Examples of the unsaturated monomer represented by Formula (VI) include 2-methylene-1,3-propanediol diacetate, 2-methylene-1,3-propanediol dipropionate, and 2-methylene-1,3-propanediol dibutyrate. Among these, 2-methylene-1,3-propanediol diacetate is preferably used in the light of easier production. For 2-methylene-1,3-propanediol diacetate, R³ and R⁴ are a hydrogen atom, and R¹⁰ and R¹¹ are a methyl group.

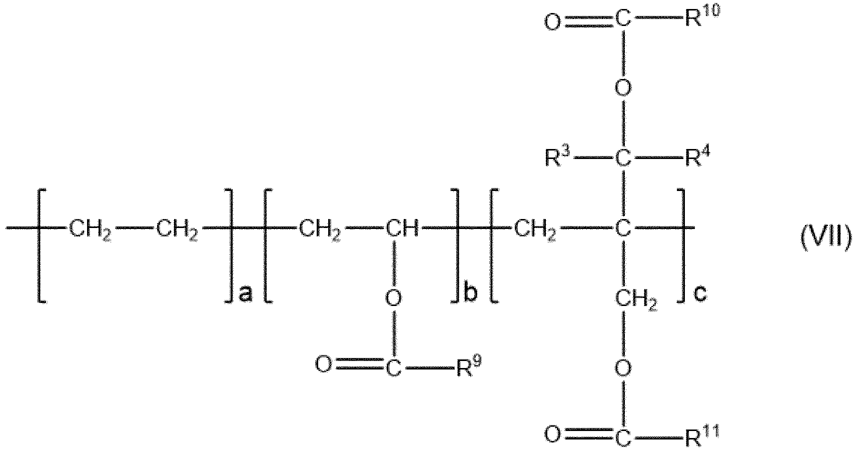

In Formula (VII), R³, R⁴, R⁹, R¹⁰ and R¹¹ are as described for Formulas (II), (V), and (VI). In Formula (VII), a, b and c represent contents (mol%) of ethylene units, vinyl ester units, and units derived from the unsaturated monomer represented by Formula (VI), respectively, based on the total monomer units. The modified ethylene-vinyl ester copolymer thus obtained is then saponified.

An unsaturated monomer represented by Formula (VIII) can be involved in the copolymerization in place of the unsaturated monomer represented by Formula (VI), and in this case, only the vinyl ester units comprising R⁹ are saponified by the saponification.

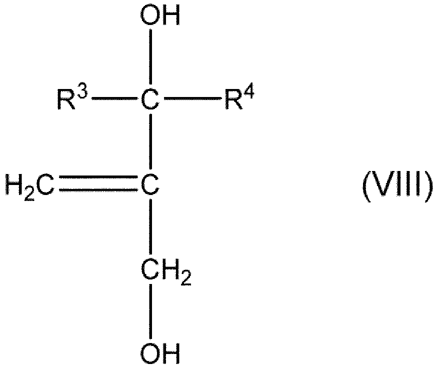

In Formula (VIII), R³ and R⁴ are as described for Formula (II). Examples of the unsaturated monomer represented by Formula (VIII) include 2-methylene-1,3-propanediol, and 2-methylene-1,3-butanediol.

Since the unsaturated monomers represented by Formulas (VI) and (VIII) is highly copolymerization-reactive with a vinyl ester monomer, its copolymerization reaction easily proceeds. It is, therefore, easy to increase a modification amount and a polymerization degree of the modified ethylene-vinyl ester copolymer obtained. Furthermore, even when the polymerization reaction is terminated at a low polymerization degree, the amount of the unreacted unsaturated monomer remaining at the end of the polymerization, and thus it is excellent in an environmental and a cost aspects. In this regard, the unsaturated monomers represented by Formulas (VI) and (VIII) are superior to other monomers having only one carbon atom which has a functional group at an allyl position, such as allyl glycidyl ether and 3,4-diacetoxy-1-butene. Here, the unsaturated monomer represented by Formula (VI) is more reactive than the unsaturated monomer represented by Formula (V).

A polymerization style for producing modified ethylene-vinyl ester copolymer by copolymerizing ethylene and the vinyl ester represented by Formula (V) with the unsaturated monomer represented by Formula (VI) or (VIII) can be any of batch polymerization, semi-batch polymerization, continuous polymerization and semi-continuous polymerization. Furthermore, a polymerization method can be a known method such as bulk polymerization, solution polymerization, suspension polymerization and emulsion polymerization. Bulk polymerization or solution polymerization in which polymerization is conducted in a neat system or in a solvent such as an alcohol is usually employed. For the purpose of producing a modified ethylene-vinyl ester copolymer with a high polymerization degree, emulsion polymerization can be an alternative.

There are no particular restrictions to a solvent used in solution polymerization; for example, an alcohol, for example more preferably a lower alcohol such as methanol, ethanol and propanol. The amount of a solvent in a polymerization reaction solution can be selected, taking a viscosity average polymerization degree of target modified EVOH and chain transfer of a solvent into account. A mass ratio of a solvent contained in the reaction solution to the total monomers (solvent/total monomers) is generally the range of 0.01 to 10, preferably the range of 0.03 to 3, further preferably 0.05 to 1.

A polymerization initiator used in copolymerizing ethylene and the vinyl ester represented by Formula (V) with the unsaturated monomer represented by Formula (VI) or (VIII) is selected from known polymerization initiators such as azo initiators, peroxide initiators and redox initiators depending on a polymerization method. Examples of an azo initiator include 2,2'-azobisisobutyronitrile, 2,2'-azobis(2,4-dimethylvaleronitrile) and 2,2'-azobis(4-methoxy-2,4-dimethylvaleronitrile). Examples of a peroxide initiator include percarbonates such as diisopropyl peroxydicarbonate, di-2-ethylhexyl peroxydicarbonate and diethoxyethyl peroxydicarbonate; perester compounds such as t-butyl peroxyneodecanate, α-cumyl peroxyneodecanate and acetyl peroxide; acetylcyclohexylsulfonyl peroxide; and 2,4,4-trimethylpentyl-2-peroxyphenoxy acetate. The above initiator can be combined with, for example, potassium persulfate, ammonium persulfate or hydrogen peroxide. A redox initiator is, for example, a combination of the above peroxide initiator with a reducing agent such as sodium bisulfite, sodium bicarbonate, tartaric acid, L-ascorbic acid and Rongalite. The amount of a polymerization initiator is adjusted in response to a polymerization rate. The amount of a polymerization initiator is preferably 0.01 to 0.2 mol, more preferably 0.02 to 0.15 mol based on 100 mol of the vinyl ester monomer. A polymerization temperature is suitably, but not limited to, room temperature to about 150 °C, preferably 40 °C or higher and 100 °C or lower.

In copolymerizing ethylene and the vinyl ester represented by Formula (V) with the unsaturated monomer represented by Formula (VI) or (VIII), copolymerization can be conducted in the presence of a chain transfer agent as long as the effects of the present invention are not impaired. Examples of a chain transfer agent include aldehydes such as acetaldehyde and propionaldehyde; ketones such as acetone and methyl ethyl ketone; mercaptans such as 2-hydroxyethane thiol; and phosphinates such as sodium phosphinate monohydrate. Among these, aldehydes and ketones are preferable. The amount of the chain transfer agent to a polymerization reaction solution can be determined, depending on a chain transfer constant of the chain transfer agent and a polymerization degree of the desired modified ethylene-vinyl ester copolymer, and generally, it is preferably 0.1 to 10 parts by mass based on 100 parts by mass of the vinyl ester monomer.

The modified ethylene-vinyl ester copolymer thus obtained can be saponified to afford a modified EVOH. Here, the vinyl ester units in the copolymer are converted into vinyl alcohol units. Furthermore, an ester bond derived from the unsaturated monomer represented by Formula (VI) is concurrently hydrolyzed into a 1,3-diol structure. Thus, a single saponification reaction can concurrently hydrolyze different types of ester groups.

The modified ethylene-vinyl ester copolymer can be saponified by a known method. The saponification reaction can be generally conducted in an alcohol or an aqueous solution of an alcohol. Examples of an alcohol used herein include lower alcohols such as methanol and ethanol, more preferably methanol. An alcohol or an aqueous alcohol used in the saponification reaction can contain other solvents such as acetone, methyl acetate, ethyl acetate and benzene as long as they are contained in 40 % by mass or less. A catalyst used for the saponification is an alkali-metal hydroxide such as potassium hydroxide and sodium hydroxide; an alkaline catalyst such as sodium methylate; and an acidic catalyst such as a mineral acid. A saponification temperature is preferably, but not limited to, within the range of 20 to 120 °C. When a gel-like product precipitates as the saponification proceeds, the product can be pulverized, rinsed and dried to afford a modified EVOH.

The modified EVOH can contain a structural unit derived from another ethylenically unsaturated monomer which is copolymerizable with ethylene, the vinyl ester represented by Formula (V), and the unsaturated monomer represented by Formula (VI) or (VIII) as long as the effects of the present invention are not impaired. Examples of such other ethylenically unsaturated monomers include α-olefins such as propylene, n-butene, isobutylene and 1-hexene; acrylic acid and salts thereof; unsaturated monomers having an acrylic ester group; methacrylic acid and salts thereof; unsaturated monomers having a methacrylic ester group; acrylamide, N-methylacrylamide, N-ethylacrylamide, N,N-dimethylacrylamide, diacetone acrylamide, acrylamidopropanesulfonic acid and salts thereof, acrylamidopropyldimethylamine and salts thereof (for example, quaternary salts); methacrylamide, N-methylmethacrylamide, N-ethylmethacrylamide, methacrylamidopropanesulfonic acid and salts thereof, methacrylamidopropyldimethylamine and salts thereof (for example, quaternary salts); vinyl ethers such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether, stearyl vinyl ether and 2,3-diacetoxy-1-vinyloxypropane; vinyl cyanides such as acrylonitrile and methacrylonitrile; vinyl halides such as vinyl chloride and vinyl fluoride; vinylidene halides such as vinylidene chloride and vinylidene fluoride; allyl compounds such as allyl acetate, 2,3-diacetoxy-1-allyloxypropane and allyl chloride; unsaturated dicarboxylic acid and salts or esters thereof such as maleic acid, itaconic acid and fumaric acid; vinylsilane compounds such as vinyltrimethoxysilane; and isopropenyl acetate.

There are no particular restrictions to a method for producing a modified **EVOH** comprising a monomer unit represented by Formula (III) as a monomer unit having a primary hydroxy group at the right end of Formula (I); for example, a method comprising copolymerizing 3,4-diol-1-butene, a vinyl ester monomer and ethylene to give a copolymer and then saponifying it; a method comprising copolymerizing 3,4-diacyloxy-1-butene, a vinyl ester monomer and ethylene to give a copolymer and saponifying it; a method comprising copolymerizing 3-acyloxy-4-ol-1-butene, a vinyl ester monomer and ethylene to give a copolymer and saponifying it; a method comprising copolymerizing 4-acyloxy-3-ol-1-butene, a vinyl ester monomer and ethylene to give a copolymer and saponifying it; and a method comprising copolymerizing 3,4-diacyloxy-2-methyl-1-butene, a vinyl ester monomer and ethylene to give a copolymer and saponifying it. A modified EVOH comprising the monomer unit represented by Formula (III) can be prepared as described for a modified EVOH comprising the monomer unit represented by Formula (II), except that a different monomer is used for forming a monomer unit having a primary hydroxy group at the right end of Formula (I).

Here, such 3,4-diol-1-butene is represented by Formula (IX); 3,4-diacyloxy-1-butene is represented by Formula (X); 3-acyloxy-4-ol-1-butene is represented by Formula (XI); and 4-acyloxy-3-ol-1-butene is represented by Formula (XII).

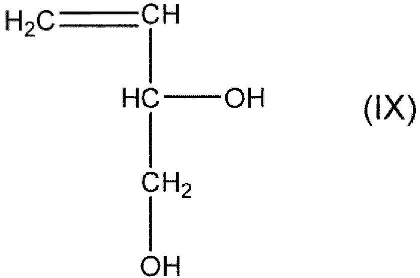

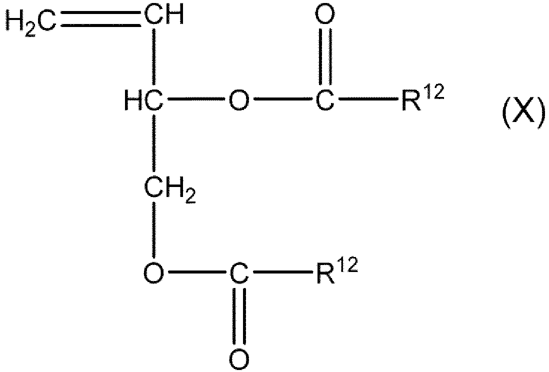

In this formula, R¹² is an alkyl group, preferably a methyl group.

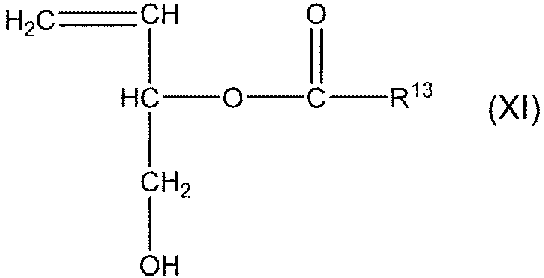

In this formula, R¹³ is an alkyl group, preferably a methyl group.

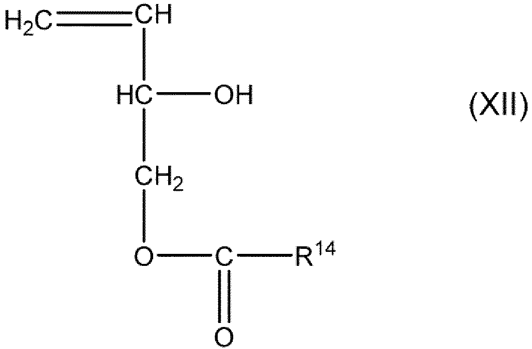

In this formula, R¹⁴ is an alkyl group, preferably a methyl group.

There are no particular restrictions to a method for producing a modified EVOH comprising the monomer unit represented by Formula (IV) as a monomer unit having a primary hydroxy group at the right end of Formula (I); for example, it is produced by reacting an EVOH having an ethylene unit content of 24 to 55 mol% with a monovalent epoxy compound described later. Nonlimiting examples of a suitable reaction method are a method wherein an EVOH and a monovalent epoxy compound are reacted in a solution, and a method wherein an EVOH and a monovalent epoxy compound are reacted in an extruder.

In a method involving a solution reaction, a monovalent epoxy compound can be reacted in a solution of an EVOH in the presence of an acid or alkali catalyst, to give a modified EVOH. Alternatively, a modified EVOH can be produced by dissolving an EVOH and a monovalent epoxy compound in a reaction solvent followed by heating. A reaction solvent is preferably a polar aprotic solvent which is a good solvent to an EVOH, including dimethylsulfoxide, dimethylformamide, dimethylacetamide and N-methylpyrrolidone.

Examples of a reaction catalyst include acid catalysts such as p-toluenesulfonic acid, methanesulfonic acid, trifluoromethanesulfonic acid, sulfuric acid and boron trifluoride; and alkali catalysts such as sodium hydroxide, potassium hydroxide, lithium hydroxide and sodium methoxide. Among these, an acid catalyst is preferably used. The amount of the catalyst is suitably about 0.0001 to 10 parts by mass based on 100 parts by mass of an EVOH. A reaction temperature is suitably room temperature to 150 °C.

In a production method wherein an EVOH and a monovalent epoxy compound are reacted in an extruder, an extruder used can be, but not limited to, a single screw extruder, a twin screw extruder and a multiscrew extruder with two or more screws. Preferably, an EVOH and a monovalent epoxy compound are reacted at a temperature of about 200 °C to 300 °C. When a twin screw extruder or a multiscrew extruder with two or more screws is used, a pressure in a reaction zone can be easily increased by changing screw configuration, leading to an efficient reaction of an EVOH and a monovalent epoxy compound. For a single screw extruder, a pressure in a reaction zone can be increased by connecting two or more extruders and arranging a valve in a resin flow channel between the extruders. Likewise, two or more twin screw extruders and/or multiscrew extruders with two or more screws can be connected for the production.

A monovalent epoxy compound is an epoxy compound having only one intramolecular epoxy group.

There are no particular restrictions to a monovalent epoxy compound used in the present invention. Specifically, the compounds represented by Formulas (XIII) to (XV) are suitably used.

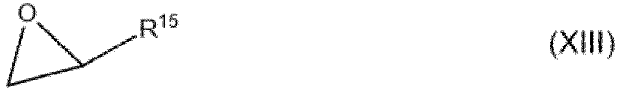

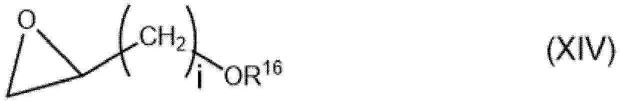

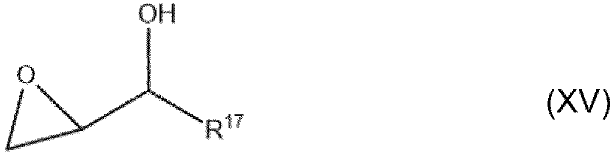

In these formulas, R¹⁵, R¹⁶ and R¹⁷ represents a hydrogen atom, an alkyl group having 1 to 7 carbon atoms, or a cycloalkyl group having 3 to 7 carbon atoms; R¹⁶ and R¹⁷ represents a hydrogen atom, an alkyl group having 1 to 6 carbon atoms, or a cycloalkyl group having 3 to 6 carbon atoms; and i represents an integer of 1 to 7.

The carbon number of a monovalent epoxy compound is particularly preferably 2 to 8. In the light of gas barrier properties of a modified EVOH obtained, a monovalent epoxy compound is more preferably 1,2-epoxybutane, epoxypropane, epoxyethane or glycidol, further preferably epoxypropane or glycidol.

A modified EVOH is produced by reacting an EVOH and a monovalent epoxy compound. A mixing ratio of a monovalent epoxy compound based on 100 parts by mass of an EVOH is preferably 1 to 50 parts by mass.

A content of the EVOH in the pellet of the present invention is generally 50 % by mass or more, preferably 60 % by mass or more, more preferably 70 % by mass or more, further preferably 80 % by mass or more, particularly preferably 90 % by mass or more, most preferably 95 % by mass or more.

The type of the particles contained in the pellet of the present invention can be, but not limited to, inorganic compound particles or organic compound particles, preferably inorganic compound particles. The particles can be one type alone or in combination of two types or more.

The inorganic compound particles are preferably inorganic oxide particles, more preferably silicon oxide particles or metal oxide particles. A metal constituting the metal oxide particles is preferably at least one selected from the group consisting of aluminum, magnesium, zirconium, cerium, tungsten, molybdenum, titanium, and zinc. Specific examples of the inorganic oxide constituting the inorganic oxide particles include silicon oxide, aluminum oxide, zirconium oxide, magnesium oxide, cerium oxide, tungsten oxide, molybdenum oxide, titanium oxide, zinc oxide, and composites thereof, preferably silicon oxide. Among silicon oxides, amorphous silica is particularly preferable.

Organic compound particles can be, but not limited to, fatty acid amides, fatty acid metal salts (such as calcium stearate), and low molecular weight polyolefins (such as low molecular weight polyethylene with a molecular weight of about 500 to 10,000, or low molecular weight polypropylene, etc.). Among these, as the organic compound particles, preferred is at least one selected from the group consisting of fatty acid amides and fatty acid metal salts, more preferably fatty acid amides. Specific examples of the fatty acid amides include saturated fatty acid amides (for example, stearamide, palmitamide and lauramide), unsaturated fatty acid amides (for example, oleamide and erucamide), and bis-fatty acid amides (for example, ethylene bisstearamide and methylene bisstearamide). A carbon number of the fatty acid amide and the fatty acid metal salt is preferably 6 or more, more preferably 10 or more. Among these fatty acid amides, a bis-fatty acid amide is preferable and ethylene bisstearamide is more preferable.

An average particle size R of the particles is 1 to 30 µm. If the average particle size R is less than 1 µm, blocking resistance is insufficient. The average particle size R is preferably 2 µm or more, more preferably 3.5 µm or more. If the average particle size R is more than 30 µm, flexibility of a molded article obtained is insufficient. The average particle size R of the particles is a median diameter measured by light scattering technique for a circulating dispersion prepared by dispersing the particles in water or an organic solvent and thoroughly stirring the mixture.

A content A of the particles in the pellet of the present invention is 5 to 5000 ppm. If the content is less than 5 ppm, blocking of the pellets occurs. The content A is preferably 50 ppm or more, more preferably 200 ppm or more, further preferably 500 ppm or more, particularly preferably 800 ppm or more, most preferably 1000 ppm or more. If the content A of the pellet is more than 5000 ppm, flexibility of a molded article obtained is insufficient. The content A is preferably 4000 ppm or less, more preferably 3000 ppm or less, further preferably 2700 ppm or less, particularly preferably 1800 ppm or less.

As long as not inhibiting the effects of the present invention, the pellet can contain, in addition to the EVOH and the particles, other additives. Examples of the other additives include a plasticizer, a lubricant, a stabilizer, a surfactant, a colorant, an ultraviolet absorber, an antistatic, a drying agent, a crosslinking agent and a metal salt.

Particularly preferably, the pellet of the present invention contains an alkali metal salt, by which when the pellet is laminated with another resin, interlayer adhesiveness is improved. Examples of a cation species of the alkali metal salt preferably include, but not limited to, a sodium salt and a potassium salt. There are also no particular restrictions to an anion species of the alkali metal salt. It can be added as a caboxylate salt, a carbonate salt, a bicarbonate salt, a phosphate salt, a hydrogenphosphate salt, a borate salt, a hydroxide, or the like. The amount of the alkali metal salt is preferably 10 to 500 ppm in terms of an alkali metal element. If the content of the alkali metal salt is less than 10 ppm, interlayer adhesiveness may be insufficient, and it is more suitably 50 ppm or more. If the content of the alkali metal salt is more than 500 ppm, melt stability may be insufficient, and it is more suitably 300 ppm or less.

It is also preferable that the pellet of the present invention contains a phosphoric acid compound, whereby coloration during melt molding can be inhibited. Examples of the phosphoric acid compound which can be used include, but not limited to, various acids such as phosphoric acid and phosphorous acid, and salts thereof. A phosphate salt can be contained in any type of a monobasic phosphate salt, a dibasic phosphate salt and a tribasic phosphate salt, preferably a monobasic phosphate salt. Its cation species is preferably, but also not limited to, an alkali metal salt. Among these, sodium dihydrogen phosphate and potassium dihydrogen phosphate are preferable. A content of the phosphoric acid compound is preferably 5 to 200 ppm in terms of phosphate radical. If the content of the phosphoric acid compound is less than 5 ppm, coloration resistance during melt molding may be insufficient. If the content of the phosphoric acid compound is more than 200 ppm, melting stability may be insufficient, and more suitably, it is 160 ppm or less.

The pellet of the present invention can contain a boron compound, whereby torque fluctuation during heating and melting can be inhibited. Examples of the boron compound include, but not limited to, boric acids, borate esters, borate salts, and boron hydrides. Specifically, boric acids include orthoboric acid, metaboric acid and tetraboric acid; borate esters include triethyl borate, and trimethyl borate; borate salts include alkali metal salts and alkaline earth metal salts of the above various boric acids and borax. Among these compounds, orthoboric acid (hereinafter, sometimes simply referred to as boric acid) is preferable. A content of the boron compound is suitably 20 to 2000 ppm or less in terms of boron element. If the content of the boron compound is less than 20 ppm, torque fluctuation inhibition during heating and melting may be insufficient, and it is more suitably 50 ppm or more. If the content of the boron compound is more than 2000 ppm, gelation tends to occur and moldability may be deteriorated, and it is more suitably 1500 ppm or less.

As long as not inhibiting the effects of the present invention, for improving melt stability and the like, the pellet can contain 0.001 to 1 % by mass of one or more of hydrotalcite compounds, hindered phenol thermal stabilizers, hindered amine thermal stabilizers, metal salts of a higher aliphatic carboxylic acid (for example, calcium stearate, magnesium stearate, and the like). Examples of other additives include the followings.

Antioxidant: 2,5-di-t-butyl-hydroquinone, 2,6-di-t-butyl-p-cresol, 4,4'-thiobis-(6-t-butylphenol), 2,2'-methylene-bis-(4-methyl-6-t-butylphenol), octadecyl-3-(3',5'-di-t-butyl-4'-hydroxyphenyl)propionate, 4,4'-thiobis-(6-t-butylphenol) and the like.

UV absorber: ethylene-2-cyano-3',3'-diphenylacrylate, 2-(2'-hydroxy-5'-methylphenyl)benzotriazole, 2-(2'-hydroxy-3'-t-butyl-5'-methylphenyl)5-chlorobenzotriazole, 2-hydroxy-4-methoxybenzophenone, 2,2'-dihydroxy-4-methoxybenzophenone and the like.

Plasticizer: dimethyl phthalate, diethyl phthalate, dioctyl phthalate, wax, liquid paraffin, phosphate esters and the like.

Antistatic agent: pentaerythritol monostearate, sorbitan monopalmitate, sulfated polyolefins, polyethylene oxide, carbowax and the like.

Lubricant: ethylenebisstearamide, butyl stearate and the like.

Colorant: carbon black, phthalocyanine, quinacridone, indoline, azo pigments, bengalla and the like.

A method for producing the pellet of the present invention preferably includes, but not limited to, a production method comprising the step of cutting a strand containing the EVOH, the particles, and water to give a cylindrical water-containing pellet, and the step of drying the water-containing pellet to form the recesses. According to this method, as will be described later, predetermined projections can be formed on the pellet surface, and predetermined recesses can be formed in the lateral surface or the cut surface of the pellet.

A method for blending the EVOH and the particles includes a method comprising the step of blending the EVOH dissolved in a good solvent such as a mixed solvent of water/an alcohol and the particles; a method comprising the step of blending the EVOH and the particles in the good solvent and then the step of dissolving the EVOH. Here, if necessary, other additives can be added. Examples of the alcohol contained in the mixed solvent include methanol, ethanol and propanol, industrially preferably methanol. A mass ratio of the EVOH to the good solvent blended (EVOH/good solvent) is generally 20/80 to 60/40. A mass ratio of water to the alcohol in the mixed solvent (water/alcohol) is generally 10/90 to 60/40. The EVOH solution thus obtained can be extruded into a poor solvent through a nozzle or the like to precipitate, giving a strand containing the EVOH, the particles, water and, as necessary, other additives. In the process of producing water-containing pellets in this way, by using the EVOH solution containing the particles, projections are formed with the particles being covered with the EVOH. Here, being covered with the EVOH, the particles do not slide, so that the projections can be maintained. Furthermore, the strand shrinks when the EVOH solution is extruded into the poor solvent to precipitate, so that some of the projections are first formed on its surface. Then, when the water-containing pellet is dried, the pellets further shrink as the solvent volatilizes, so that the projections on the pellet surface become higher.

Examples of the poor solvent include water or a water/alcohol mixed solvent; aromatic hydrocarbons such as benzene; ketones such as acetone and methyl ethyl ketone; ethers such as dipropyl ether; and organic acid esters such as methyl acetate, ethyl acetate and methyl propionate, preferably a water/alcohol mixed solvent in the light of handleability. Examples of the alcohol include alcohols such as methanol, ethanol and propanol, industrially preferably methanol. A mass ratio of water/alcohol in blending (water/alcohol) can be appropriately adjusted depending on a composition of the EVOH solution, a bath temperature during pelletization described later and the like, and is generally 70/30 to 95/5. A mass ratio of the poor solvent to the strand (poor solvent/strand) is preferably, but not limited to, 50 to 10,000 in the light of easily obtaining a water-containing pellet with uniform dimensional distribution.

A temperature at which the EVOH solution containing the EVOH, the particles and the like is brought into contact with the poor solvent (bath temperature during pelletization) is preferably -10°C or higher, more preferably 0°C or higher. Meanwhile, the temperature is preferably 40°C or lower, more preferably 20°C or lower, even more preferably 15°C or lower, and even more preferably 10°C or lower. The solution is extruded into the poor solvent in the form of a strand from a nozzle or the like. A shape of the outlet of such a nozzle is preferably circular. An inner diameter of the nozzle is preferably 1 to 10 mm. In this way, the solution is extruded from the nozzle in the form of a strand. At this time, the number of strands does not necessarily have to be one, and any number between several to several hundred can be extruded. Next, after the EVOH has sufficiently solidified, the extruded strand is cut to give a cylindrical water-containing pellet. A length of the water-containing pellet at this time is generally 1 to 10 mm.

Before drying the water-containing pellet thus obtained, it is washed and other additives are added as necessary.

The water-containing pellet can be washed by, for example, immersing the water-containing pellet in water or the like. The water can contain acetic acid, a content of which is generally 0.1 to 5 g/L. A water content of the water-containing pellet after washing is generally 30 to 60 % by mass.

Other additives can be added to the water-containing pellet after washing, by way of, for example, immersing the water-containing pellet in an aqueous solution in which the additives are dissolved.

Suitable methods for drying the water-containing pellet include stationary drying and fluidized drying, and it is also possible to employ a multi-stage drying process that combines several drying methods. Generally, a drying temperature is 50 to 120°C and a drying time is 0.5 to 30 hours. At this time, a drying temperature can be increased in stages. A water content of the water-containing pellet before drying is generally 30 to 60 % by mass, and a water content of the pellet after drying is generally 0 to 9 % by mass. By drying the water-containing pellet containing the particles in this way, after drying, predetermined recesses are formed in the lateral surface or the cut surface of the pellet, and projections consisting of the particles covered with the EVOH are formed on the surface.

It is necessary that predetermined recesses described later are formed in at least one of the lateral surface and the cut surface of the pellet of the present invention. These recesses can be formed by drying the cylindrical water-containing pellet. The recesses are formed in the pellet allows for reduction of a contact area between the pellets, resulting in improvement of blocking resistance, a stable output amount during melt extrusion and improvement of extrusion stability. In the present invention, the recesses can be formed in one or both of the lateral surface and the cut surface of the pellet. Particularly preferably, the recesses are formed in at least the lateral surface of the pellet.

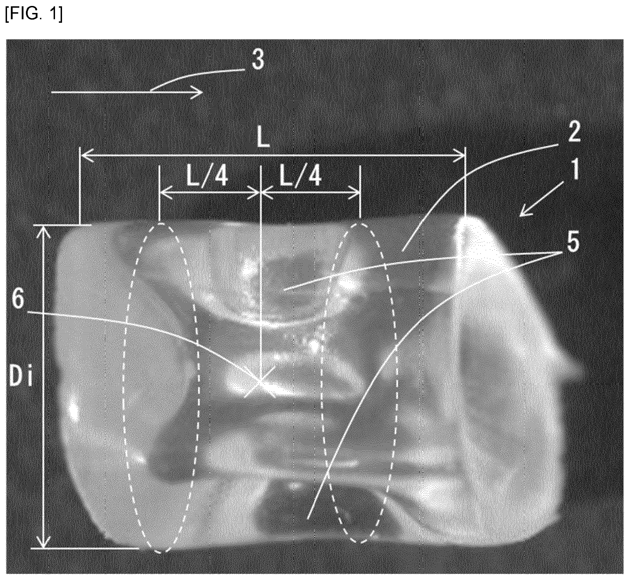

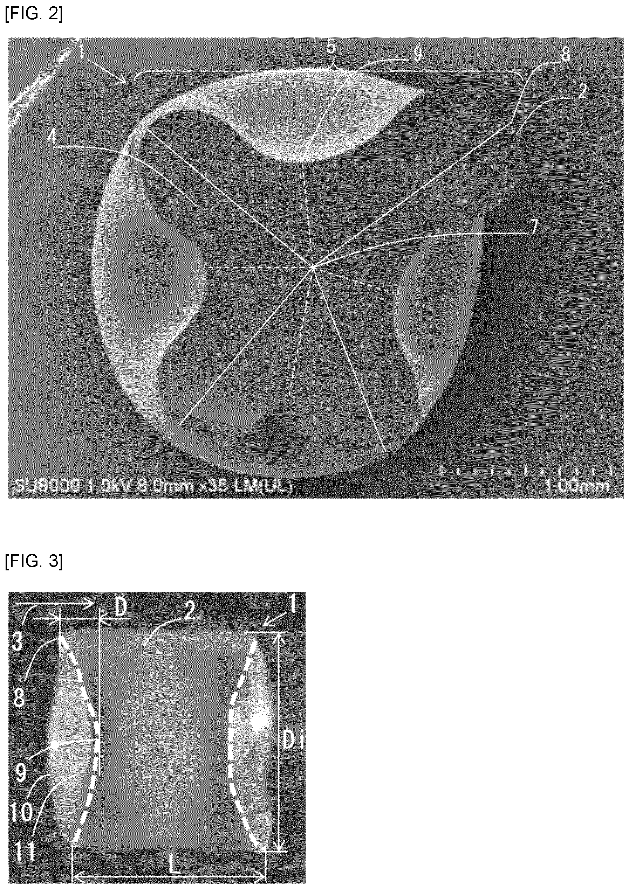

FIG. 1 is an appearance photograph of a lateral surface 2 of a pellet obtained in Example 1 described later. FIG. 2 is an electron microgram of a cross-section 4 cut perpendicular to a flow direction 3 (an extrusion direction during forming a strand) of the pellet 1. There will be described recesses 5 formed in the lateral surface 2 of the pellet 1 of the present invention using these figures. In the lateral surface 2 of the pellet 1 shown in FIGs. 1 and 2, four recesses 5 are formed. As shown in FIGs. 1 and 2, the recesses 5 formed in the lateral surface 2 are generally arrayed in a line in the circumferential direction of the cylindrical pellet 1. When the recesses 5 are formed in the lateral surface 2 of the pellet 1 of the present invention, the number n of the recesses 5 must be 2 to 5, whereby a contact area between the pellets 1 is reduced, resulting in improvement of blocking resistance and extrusion stability. The number n of the recesses 5 is preferably 3 or more, while being preferably 4 or less.

In cases where the recesses 5 are formed in the lateral surface 2 of the pellet 1, at least in one cross-section 4 perpendicular to a flow direction 3 of the pellet 1 positioned within L/4 (mm) from the gravity center 6 of the pellet 1, distances α1 to αn respectively from the gravity center 7 of the cross-section 4 to the edges 8 of the recesses 5 formed in the lateral surface 2 and distances β1 to βn respectively from the gravity center 7 of the cross-section 6 to the bottoms 9 of the recesses 5 formed in the lateral surface 2 must satisfy Formula (1), whereby a contact area between the pellets 1 is reduced, resulting in improvement of blocking resistance and extrusion stability. $\left(β1+β2⋯+βn\right) / \left(α1+α2⋯+αn\right) \leq 0.8$

In FIG. 1, two cross-sections perpendicular to the flow direction 3 of the pellet 1 positioned at L/4 (mm) from the gravity center 6 of the pellet 1 are indicated by broken lines. Distances α1 to αn respectively and distances β1 to βn respectively obtained by measuring at least one cross-section 4 at a position between these must satisfy Formula (1). The cross-section 4 in FIG. 2 is obtained by cutting the pellet 1 perpendiculary to the flow direction 3 of the pellet 1 at a position within L/4 (mm) from the gravity center 6 of the pellet 1. Herein, distances α1 to αn from the gravity center 7 of the cross-section 4 to the edge 8 of the recesses 5 mean distances from the gravity center 7 of the cross-section 4 to the most distant point from the gravity center 7 in each edge 8, as indicated by a solid line in FIG. 2. Distances β1 to βn from the gravity center 7 of the cross-section 4 to the bottom 9 of the recesses 5 mean distances from the gravity center 7 of the cross-section 4 to the closest point from the gravity center 7 in each bottom 9, as indicated by a broken line.

The left-hand side of Formula (1) is a ratio of the total of distances α1 to αn (solid line in FIG. 2) from the gravity center 7 to each edge 8 to the total of distances β1 to βn (broken line in FIG. 2) from the gravity center 7 to the bottom 9 of the recesses 5. When the cross-section 4 is circular, the ratio is 1, and when recesses 5 are formed by deformation, the ratio is reduced. Generally, when being dried, a cylindrical water-containing pellet uniformly shrinks, and therefore, a cross-section perpendicular to a flow direction of the pellet after drying becomes circular. In contrast, in the present invention, the pellet 1 in which a predetermined number of recesses 5 satisfying Formula (1) are formed in the lateral surface 2 can be obtained by (1) changing a content a of ethylene units, (2) changing a melting enthalpy ΔHm, (3) using the modified EVOH represented by Formula (I) as the EVOH and changing the type and/or a content of the monomer unit indicated by c, (4) changing the size and/or a ratio of a length to a diameter of the cylindrical water-containing pellet, (5) changing a composition of the EVOH solution, (6) changing a composition of a good solvent during precipitation. Among these, it is preferable to form the recesses 5 by the method of (2) above. A melting enthalpy ΔHm correlates to crystallinity, and thus a melting enthalpy ΔHm is adjusted to the range described later, to reduce crystallinity of the EVOH. Reduction of crystallinity allows the water-containing pellet to easily shrink nonuniformly, so that predetermined recesses 5 are easily formed in the lateral surface 2.

The left-hand side of Formula (1) is preferably 0.7 or less (that is, satisfying Formula (1')), more preferably 0.65 or less, further preferably 0.55 or less, particularly preferably 0.52 or less. The left-hand side of Formula (1) is preferably 0.2 or more (that is, satisfying Formula (1")), more preferably 0.3 or more, further preferably 0.35 or more, particularly preferably 0.4 or more. $\left(β1+β2⋯+βn\right) / \left(α1+α2⋯+αn\right) \leq 0.7$ $0.2 \leq \left(β1+β2…+βn\right) / \left(α1+α2…+αn\right)$

When the recesses 5 are formed in the lateral surface 2 of the cylindrical pellet 1, a ratio (Di/L) of a diameter Di to a length L (mm) of the pellet 1 is preferably 1 or less. The ratio (Di/L) is more preferably 0.9 or less, further preferably 0.8 or less. The ratio (Di/L) is preferably 0.2 or more, more preferably 0.3 or more, further preferably 0.5 or more.

When the recesses 11 are formed in the cut surface 10 of the cylindrical pellet 1, a ratio D/L of a depth D (mm) of the recesses 11 formed in the cut surface 10 to a length L(mm) of the pellet 1 must be 0.1 or more, whereby a contact area between the pellets 1 is reduced, resulting in improvement of blocking resistance and extrusion stability. FIG. 3 is an exemplary appearance photograph of the lateral surface 2 of the pellet 1 of the present invention in which the recesses 11 are formed in the cut surface 10. Two broken lines indicate a shape of each recess 11 formed in the cut surface 10 in both sides observed from the lateral surface 2 of the cylindrical pellet 1. The D (mm) of the recesses 11 means a distance in the flow direction 3 between two points in the recesses 11 formed in the cut surface 10 which are most distant in the flow direction 3. The ratio D/L is generally 0.4 or less. When the recesses 11 are formed in the cut surface 10, the recesses 11 with the ratio D/L being within the above range must be formed in both cut surfaces 10.

When the recesses 11 are formed in the cut surface 10 of the cylindrical pellet 1, a ratio (Di/L) of a diameter Di to a length L (mm) of the pellet 1 is preferably more than 1. The ratio (Di/L) is preferably 3 or less, more preferably 2 or less, further preferably 1.75 or less.

It is necessary that projections containing the particles are formed in the surface of the pellet in which the particles are covered with the EVOH . Such projections formed allow blocking resistance to be improved. It is thought that such an effect is exhibited by covering the surfaces of the particles with the EVOH. Such covering can be formed by the method described above. It is thought that the projections are formed when the surface layer of the EVOH pellet is pushed up by the added particles. A projection height H (µm) and the projection number per a unit area can be adjusted by the amount of the particles added and average particle size R (µm) thereof.

The number of the projections formed in the surface of the pellet of the present invention is preferably 1 to 100000/mm². With the number of the projections being within such a range, a contact area between the pellets 1 is further reduced, resulting in further improvement of blocking resistance and extrusion stability.

The above projection height H is 0.1 to 15 µm. If the height H is less than 0.1 µm, blocking resistance is insufficient. The height H is preferably 0.2 µm or more, more preferably 0.3 µm or more, further preferably 0.4 µm or more, particularly preferably 0.5 µm or more. If the height H is more than 15 µm, flexibility of a molded article obtained is insufficient. The height H is preferably 10 µm or less, more preferably 7.5 µm or less, further preferably 5 µm or less, even more preferably 3 µm or less, particularly preferably 2.5 µm or less, most preferably 2 µm or less. The projection height is calculated by the method described in Examples.

It is also preferable that an average particle size R (µm) of the particles and the projection height H (µm) satisfy Formula (7). If the H/R is less than 0.1, blocking resistance may be insufficient. The H/R is more preferably 0.11 or more, further preferably 0.12 or more. If the H/R is more than 0.9, flexibility of a molded article obtained may be insufficient. The H/R is more preferably 0.85 or less, further preferably 0.8 or less. $0.1 \leq H / R \leq 0.9$

A melting enthalpy ΔHm of the pellet is preferably 10 to 100 J/g. If the melting enthalpy ΔHm is less than 10 J/g, blocking resistance may be insufficient. The melting enthalpy ΔHm is preferably 20 J/g or more. If the melting enthalpy ΔHm is more than 100 J/g, stretchability may be insufficient. With the melting enthalpy ΔHm being 100 J/g or less, crystallinity of the EVOH is reduced. With crystallinity being reduced, a water-containing pellet tends to nonuniformly shrink, so that forming predetermined recesses in a lateral surface of the pellet becomes easier. The melting enthalpy ΔHm is preferably 90 J/g or less, further preferably 80 J/g or less, further preferably 65 J/g or less, particularly preferably 64 J/g or less. A melting enthalpy ΔHm of the pellet is calculated by the method described in Examples.

It is also preferable that the melting enthalpy ΔHm (J/g) of the pellet and the content A(ppm) of the particles satisfy Formula (6). If "ΔHm/100+A/500" is less than 1, blocking resistance may be insufficient. The "ΔHm/100+A/500" is preferably 2 or more, further preferably 2.5 or more. If "ΔHm/100+A/500" is more than 10, stretchability may be insufficient. The ΔHm/100+A/500 is more preferably 9 or less, further preferably 8 or less. $1 \leq ΔHm / 100 + A / 500 \leq 10$

A melting point of the pellet is generally, but not limited to, 110 to 200 °C. If the melting point is less than 110 °C, blocking resistance may be insufficient. The melting point is preferably 120 °C or higher, more preferably 130 °C or higher, further preferably 140 °C or higher, particularly preferably 145 °C or higher. If the melting point is higher than 200 °C, thermal stability during molding processing is deteriorated. The melting point is preferably 190 °C or lower, more preferably 185 °C or lower, further preferably 180 °C or lower, particularly preferably 175 °C or lower.

The pellet can be used alone or in combination with another resin pellet as mixed pellets. The other resin pellet can be EVOH pellets other than the pellet of the present invention, pellets of various thermoplastic resins and the like. A pellet content of the present invention in the mixed pellets is generally, but not limited to, 50 % by mass or more, preferably 70 % by mass or more, more preferably 80 % by mass or more, further preferably 90 % by mass or more.

The pellet of the present invention is excellent in blocking resistance and can provide a molded article with excellent flexibility. Furthermore, the pellet is excellent in extrusion stability. Furthermore, since the pellet has a high dissolution rate in a solvent, a time required for preparing a coating solution can be shortened, and a production rate of a coating film can be increased. The pellet can be, therefore, used in a wide variety of applications including various packaging containers such as food packaging containers, pharmaceutical packaging containers, industrial chemical packaging containers and agricultural chemical packaging containers; fuel containers; transportation pipes; and resin wallpapers, taking advantage of performance such as gas barrier properties, transparency, aroma retention, solvent resistance and oil resistance which the EVOH inherently has.

There can be also suitably a pellet containing a modified EVOH and particles, which is cut into a cylindrical shape, wherein the pellet contains 5 ppm to 5,000 ppm of particles with an average particle size R of 1 µm to 30 µm; the modified EVOH is represented by Formula (I): 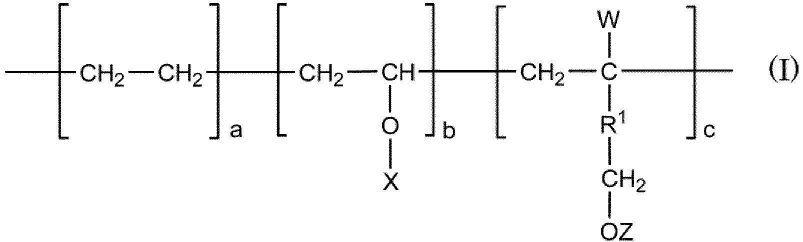
wherein W represents a hydrogen atom, a methyl group or a group represented by R²-OY; X, Y and Z are each independently a hydrogen atom, a formyl group or an alkanoyl group having 2 to 10 carbon atoms; R¹ and R² represent each independently a single bond, an alkylene group having 1 to 9 carbon atoms or an alkyleneoxy group having 1 to 9 carbon atoms; the alkylene group and the alkyleneoxy group can contain a hydroxy group, an alkoxy group or a halogen atom; and
contents (mol%) of a, b and c based on the total monomer units satisfy Formulas (2) to (4): $24 \leq a \leq 55$ $0.01 \leq c \leq 10$ $\left[100-\left(a+c\right)\right] \times 0.9 \leq b \leq \left[100-\left(a+c\right)\right]$
and a degree of saponification (DS) as defined by Formula (8) is 90 mol% or more: 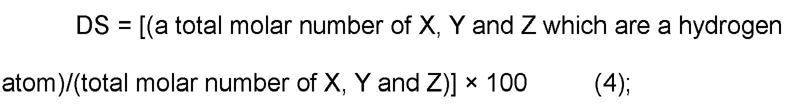 DS = [(a total molar number of X, Y and Z which are a hydrogen atom)/(total molar number of X, Y and Z)] × 100 (4);
the pellet has a length L (mm); recesses are formed in the lateral surface or the cut surface of the pellet; in cases where the recesses are formed in the lateral surface, the number n of the recesses is 2 to 5; at least in one cross-section perpendicular to a flow direction of the pellet positioned within L/4 (mm) from the gravity center of the pellet, distances α1 to αn respectively from the gravity center of the cross-section to the edges of the recesses formed in the lateral surface and distances β1 to βn respectively from the gravity center of the cross-section to the bottoms of the recesses formed in the lateral surface satisfy Formula (5): $\left(β1+β2⋯+βn\right) / \left(α1+α2⋯+αn\right) \leq 0.08$
in cases where the recesses are formed in the cut surface, a ratio D/L of a depth D (mm) of the recesses formed in the cut surface to a length L (mm) of the pellet is 0.1 or more; a projection having a height H of 0.1 µm to 15 µm is formed on the surface of the pellet; and the projection contains the particles and the particles are covered with the EVOH. The pellet is the same as the pellet described first, except that as an EVOH that represented by Formula (I) is used and the melting enthalpy ΔHm is not limited, and has comparable performance.

### EXAMPLES

There will be specifically described the present invention with reference to Examples. Hereinafter, an ethylene-vinyl acetate copolymer may be referred to as an EVAc.

### Synthesis Example 1

### (1) Synthesis of EVAc

In a 250 L pressure reaction tank equipped with a jacket, a stirrer, a nitrogen inlet port, an ethylene inlet port, and an initiator addition inlet port were charged 90 kg of vinyl acetate (in Formula (V), R⁹ is a methyl group: hereinafter, referred to as VAc), 9 kg of methanol (hereinafter, sometimes referred to as MeOH), and 1.9 kg of 2-methylene-1,3-propanediol diacetate (in Formula (VI), R³ and R⁴ are a hydrogen atom, and R¹⁰ and R¹¹ are a methyl group: hereinafter, referred to as MPDAc), and the mixture was heated to 60 °C and the reaction tank was nitrogen-purged by nitrogen bubbling for 30 min. Next, ethylene was introduced such that a reaction tank pressure (ethylene pressure) was 5.8 MPa. After adjusting a temperature in the reaction tank to 60 °C, 72 g of 2,2'-azobis(2,4-dimethylvaleronitrile) ("V-65" manufactured by Wako Pure Chemical Industries, Ltd.) as an initiator was added as a methanol solution, to initiate polymerization. During polymerization, an ethylene pressure and a polymerization temperature were maintained at 5.8 MPa and 60 °C, respectively. After 6 hours, a polymerization ratio of VAc reached 40 % and polymerization was terminated by cooling. The reaction tank was opened to remove ethylene, and then nitrogen gas was bubbled for completing ethylene removal. Then, unreacted VAc was removed under a reduced pressure. Subsequently, MeOH was added to the modified ethylene-vinyl acetate copolymer (hereinafter, sometimes referred to as modified EVAc) to which a structural unit derived from MPDAc was introduced by copolymerization, to prepare a 20 % by mass MeOH solution.

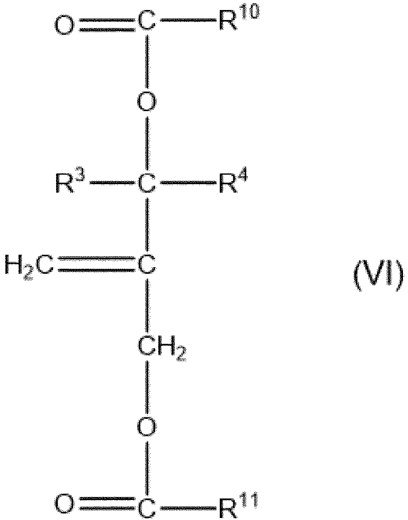

### (2) Saponification of EVAc

The 20 % by mass solution of the modified EVAc in MeOH obtained in (1) was charged in a 500 L reaction tank equipped with a jacket, a stirrer, a nitrogen inlet port, a reflux condenser and a solution inlet port. With blowing nitrogen, this solution was heated to 60 °C, and 0.5 equivalents (to the vinyl acetate units in the modified EVAc) sodium hydroxide was added as a 2N solution in MeOH. After adding the solution of sodium hydroxide in MeOH, while evaporating methyl acetate and MeOH maintaining a system temperature at 60 °C, the saponification reaction was allowed to proceed with stirring for 2 hours. Then, while the mixture was heated with stirring at 60 to 80 °C, ion-exchanged water was added, and MeOH was distilled out of the reaction tank, to precipitate the modified EVOH. The precipitated modified EVOH was collected and pulverized by a mixer. The modified EVOH powder thus obtained was added to a 1 g/L aqueous solution of acetic acid (bath ratio 20: 20 L of the aqueous solution to 1 kg of the powder), which was stirred for washing for 2 hours. This was deliquored and then poured into a 1 g/L aqueous solution of acetic acid (bath ratio 20), which was stirred for washing for 2 hours. It was deliquored and poured into ion-exchanged water (bath ratio: 20), which was stirred for washing for 2 hours, and the process was repeated three times for purification. Then, it was immersed in 10 L of an aqueous solution containing 0.5 g/L acetic acid and 0.1 g/L sodium acetate for 4 hours and then deliquored. The material was dried at 60 for 16 hours to give a crude dried material of the modified EVOH.

### (3) Content of each structural unit in EVAc

¹H-NMR spectrum for the modified EVAc before saponification was used to calculate an ethylene unit content (a mol% in Formula (VII)), a content of the structural unit derived from vinyl acetate (b mol% in Formula (VII)) and a content of the structural unit derived from the MPDAc(c mol% in Formula (VII)) in the modified EVAc.

A small sample of the solution of the modified EVAc in MeOH obtained in (1) was poured into ion-exchanged water to precipitate the modified EVAc. The precipitate was collected and dried in vacuo at 60 °C to give a dried material of the modified EVAc. Then, the dried material of the modified EVAc thus obtained was dissolved in dimethylsulfoxide (DMSO)-d6 containing tetramethylsilane as an internal standard material, which was then subjected to 500 MHz ¹H-NMR (manufactured by JEOL Ltd.: "GX-500") spectrometry at 80 °C.

Peaks in the ¹H-NMR spectrum of the modified EVAc are assigned as follows.
- 0.6 to 1.0 ppm: methylene proton of the terminal ethylene unit (4H)
- 1.0 to 1.85 ppm: methylene proton of the intermediate ethylene unit (4H), methylene proton of the main chain of the structural unit derived from MPDAc (2H), methylene proton of the vinyl acetate unit (2H)
- 1.85 to 2.1 ppm: methyl proton of the structural unit derived from MPDAc (6H) and methyl proton of the vinyl acetate unit (3H)
- 3.7 to 4.1 ppm: side-chain methylene proton of the structural unit derived from MPDAc (4H)
- 4.4 to 5.3 ppm: methine proton of the vinyl acetate unit (1H)

In accordance with the above assignment, when an integral value of 0.6 to 1.0 ppm is x, an integral value of 1.0 to 1.85 ppm is y, and an integral value of 3.7 to 4.1 ppm is z, and an integral value of 4.4 to 5.3 ppm is w, contents of the ethylene unit (a: mol%), of the vinyl ester unit (b: mol%) and of the structural unit derived from MPDAc (c: mol%) are calculated by the following equations, respectively. $a = \left(2x+2y-z-4w\right) / \left(2x+2y+z+4w\right) \times 100$ $b = 8 w / \left(2x+2y+z+4w\right) \times 100$ $c = 2 z / \left(2x+2y+z+4w\right) \times 100$

As the results calculated by the above method, a content (a) of the ethylene unit of the modified EVAc in Example 1 was 44.0 mol%; a content (b) of the vinyl ester unit was 54.5 mol%; a content (c) of the structural unit derived from MPDAc was 1.5 mol%. Here, a, b and c in the modified EVAc were the same as those in the modified EVOH after saponification.

### (4) Degree of saponification of EVOH

Similarly, ¹H-NMR spectrometry was conducted for the modified EVOH after saponification. The crude dried material of the modified EVOH obtained in (2) was dissolved in dimethylsulfoxide (DMSO)-d6 containing tetramethylsilane as an internal standard material and tetrafluoroacetic acid (TFA) as an additive, which was then subjected to 500 MHz ¹H-NMR (manufactured by JEOL Ltd.: "GX-500") spectrometry at 80 °C. The results of ¹H-NMR spectrometry shows that intensity of the peak in 1.85 to 2.1 ppm was considerably reduced and therefore, it is clear that not only the ester group derived from vinyl acetate in the modified EVOH but also the ester group contained in the structural unit derived from MPDAc were saponified to give a hydroxy group. In the ¹H-NMR spectrum obtained in Example 1, such intensity reduction of the peak in 1.85 to 2.1 ppm was also observed. A degree of saponification was calculated from a peak intensity ratio of the methyl proton of the vinyl acetate unit and the like (1.85 to 2.1 ppm) to the methine proton of the vinyl alcohol unit and the like (3.15 to 4.15 ppm) using Formula (8). A degree of saponification of the modified EVOH of Example 1 was 99.9 mol% or more.

### Synthesis Examples 2 to 10

EVAcs and EVOHs were produced and analyzed as described in Synthesis Example 1, substituting the polymerization conditions shown in Table 1 for those in Synthesis Example 1. The results are shown in Table 1.

### Example 1

### (1) Production of a water-containing pellet

In an 80 L stirring tank equipped with a jacket, a stirrer, and a reflux condenser were charged 100 parts by mass of the crude dried material of the modified EVOH obtained in Synthesis Example 1, 0.12 parts by mass of Sylysia 310P (manufactured by Fuji Silysia Chemical Ltd.), 56 parts by mass of water, and 130 parts by mass of MeOH, and the mixture was heated to 80 °C for complete dissolution. This solution is extruded through a circular nozzle with an inner diameter of 4 mm into a mixed solution of water/MeOH = 90/10 cooled to 5 °C to precipitate it in the form of a strand. This strand was cut by a strand cutter into cylindrical pellets with a length in the extrusion direction of 4 mm and a diameter of 3 mm to give water-containing pellets of the modified EVOH. A water content of the water-containing pellets of the modified EVOH obtained was measured by a halogen moisture analyzer "HR73" from Mettler-Toledo, and was determined to be 60 % by mass.

### (2) Purification of a water-containing pellet

The water-containing pellets of the modified EVOH obtained in (1) were charged in a 1 g/L aqueous solution of acetic acid (bath ratio: 20) and the mixture was stirred for 2 hours for washing. This was deliquored and further charged in a 1 g/L aqueous solution of acetic acid (bath ratio: 20) and the mixture was stirred for 2 hours for washing. After deliquored, the aqueous solution of acetic acid was replaced, and the same process was repeated. The pellets were washed with aqueous solution of acetic acid and deliquored and were poured into ion-exchanged water (bath ratio: 20). A process of stirring the mixture for 2 hours for washing and deliquoring was repeated three times for purification, to give the water-containing pellet of the modified EVOH in which a residual catalyst during saponification reaction was removed. A water content of the water-containing pellets of the modified EVOH obtained was measured by a halogen moisture analyzer "HR73" from Mettler-Toledo, and was determined to be 55% by mass.

### (3) Production of a pellet

1 part by mass of the water-containing pellets with a water content of 55 % by mass obtained in (2) was charged in 18.5 parts by mass of an aqueous solution with a sodium acetate concentration of 0.5 g/L, an acetic acid concentration of 0.4 g/L and a phosphoric acid concentration of 0.05 g/L (bath ratio: 20), and was immersed for 4 hours with periodic stirring. This was centrifugally dehydrated for surface moisture, and the wet pellets were arranged on a Teflon^{®} sheet such that the pellets did not overlap each other, and dried at 60 °C for 3 hours, at 80 °C for 3 hours, and at 110 °C for 20 hours to give the pellets containing the modified EVOH. A water content of the pellets obtained was measured by a halogen moisture analyzer "HR73" from Mettler-Toledo, and was determined to be 0.2 % by mass. A melt flow rate (MFR) (190 °C, under a load of 2160 g) of the pellets (modified EVOH) obtained was 6.0 g/10 min.

### (4) Melting point of a pellet

In accordance with JIS K 7121, measurement was conducted for the pellets obtained in (3), which was heated from 30°C to 200 °C at a rate of 10 °C/min, rapidly cooled to 0°C at a rate of 10 °C/min, and then again heated from 0 °C to 200 °C at a temperature increase rate of 10° C/min (with differential scanning calorimeter (DSC) "Q2000" manufactured by TA Instruments). Temperature calibration was performed using indium. A melting peak temperature (Tpm) was determined from a chart of the 2nd run according to the above JIS, and this was taken as the melting point of the pellets containing the modified EVOH. The melting point was 152 °C.

### (5) Sodium salt content and phosphoric acid compound content in a pellet

In Teflon^{®} pressure vessel was charged 0.5 g of the pellets obtained in (3), and 5 mL of concentrated nitric acid was added and decomposition was allowed to proceed at room temperature for 30 min. After 30 min, the lid was closed and decomposition was allowed to proceed by heating at 150°C for 10 minutes and then at 180°C for 5 minutes using a wet decomposition device (manufactured by Actac Co., Ltd.: "speedwave 4"), and then cooled to room temperature. This treated solution was transferred to a 50 mL volumetric flask (manufactured by TPX) and diluted with pure water. This solution was analyzed for contained metals using an ICP emission spectrometer ("Avio500" manufactured by PerkinElmer) to determine contents of sodium element and phosphorus element. The sodium salt content was 150 ppm in terms of sodium element, and the phosphoric acid compound content was 40 ppm in terms of phosphate radical.

### (6) Acetic acid content in a pellet

In 100 mL of ion-exchanged water was charged 20 g of the pellets obtained in (3), and extraction was performed by heating at 95 °C for 6 hours. The extract was neutralization-titrated with 1/50 N NaOH using phenolphthalein as an indicator, to determine an acetic acid content, and it was found to be 100 ppm. Here, an acetic acid content was calculated in consideration of a phosphoric acid content.

### (7) Melting enthalpy ΔHm (J/g) of a pellet

3 mg of a sample obtained by cutting the pellet obtained in (3) was sealed in an aluminum pan (manufactured by TA Instrument), and DSC measurement was conducted by heating from 30 °C to 200°C at a rate of 10 °C/min, quickly cooled to 0° C at a rate of 10 °C/min and then again heated from 0 °C to 200 °C at a heating rate of 10° C/min. A melting enthalpy (ΔHm: J/g) of the pellet containing the modified EVOH was determined from a peak area in a temperature range from the start to the end of melting during the second heating in the obtained DSC curve. The results are shown in Table 3.

### (8) Shape of a pellet

FIG. 1 is an appearance photograph of the lateral surface of the pellet obtained in (3). A diameter Di (mm) and a length L (mm) in the flow direction of the pellet were determined by measuring with a caliper. FIG. 2 is an electron microgram of a cross-section 4 cut perpendicularly to a flow direction 3 of the pellet at a position within L/4 (mm) from the gravity center 6 of the pellet 1. Four recesses 5 were formed on the lateral surface of the pellet. From the cross section 4, distances α1 to α4 from the gravity center 7 of the cross-section 4 to the edge 8 of the recesses 5 (distances from the gravity center 7 of the cross-section 4 to the most distant point from the gravity center 7 in each edge 8) and distances β1 to βn from the gravity center 7 of the cross-section 4 to the bottom 9 of the recesses 5 (distances from the gravity center 7 of the cross-section 4 to the closest point from the gravity center 7 in each bottom 9) were determined. The values obtained were substituted into Formula (1) to determine a value of the left-hand side. The results are shown in Table 3.

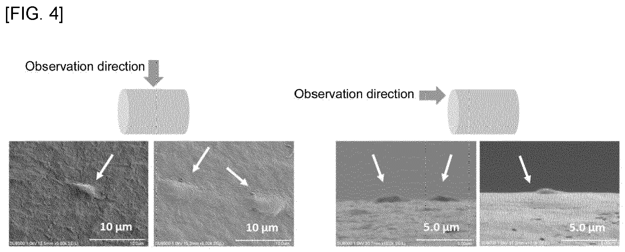

FIG. 4 is an electron microgram of the surface of the pellet obtained in (3). As shown in FIG. 4, projections were formed in the surface of the pellet 1. From the images observed from a direction parallel to the pellet surface (two images on the right side of FIG. 4), a height H (µm) and the number of projections (per mm²) were determined. The results are shown in Table 3. From images observed from a direction perpendicular to the surface of the pellet 1 (two images on the left side of FIG. 4) and detection of carbon element component and oxygen element component by analysis of the projection sites by means of a scanning electron microscope "S-3000N" equipped with EDX (energy dispersive X-ray analyzer) manufactured by Hitachi, Ltd., it was confirmed that the surface of projection was made of the modified EVOH.

### (9) Evaluation of blocking resistance of a water-containing pellet during drying

### (9-1) Evaluation of blocking resistance of the water-containing pellet at a drying temperature of 70 °C

3 kg of the centrifugally dehydrated water-containing pellets obtained in (3) were charged in a 30 cm square stainless steel mesh basket and dried at 70 °C for 2 hours in a precise thermostat "DH410" manufactured by Yamato Scientific Co., Ltd. The pellets after drying were passed through a sieve with a 5 mm opening for 1 min, and the mass of the pellets remaining in the sieve as the pellets involved in blocking was measured. A blocking rate at 70°C was calculated using Formula (9) and evaluated in accordance with the following criteria. The results are shown in Table 3. 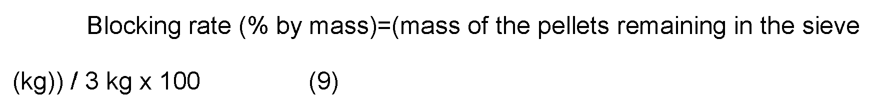 Blocking rate (% by mass)=(mass of the pellets remaining in the sieve (kg)) / 3 kg x 100 (9)
A: A blocking rate is less than 10 % by mass
B: A blocking rate is 10 % by mass or more and less than 20 % by mass
C: A blocking rate is 20 % by mass or more

### (9-2) Evaluation of blocking resistance of the water-containing pellet at a drying temperature of 90 °C

The whole pellets used for evaluation in (9-1) were again charged in a 30 cm square stainless steel mesh basket and dried at 90 °C for 2 hours in a precise thermostat "DH410" manufactured by Yamato Scientific Co., Ltd. The same process as (9-1) was conducted to calculate a blocking rate at 90 °C. The results are shown in Table 3.

### (9-3) Evaluation of blocking resistance of the water-containing pellet at a drying temperature of 110 °C

The whole pellets used for evaluation in (9-2) were again charged in a 30 cm square stainless steel mesh basket and dried at 110 °C for 2 hours in a precise thermostat "DH410" manufactured by Yamato Scientific Co., Ltd. The same process as (9-1) was conducted to calculate a blocking rate at 110 °C. The results are shown in Table 3.

In the series of drying processes, the smaller the amount of blocked pellets was, the higher the pellet yield was, and the pellets were evaluated to be pellets having good blocking resistance.

### (10) Evaluation of extrusion stability

A single-layer film was formed from the pellets obtained in (3) using a 20 mm extruder "D2020" from Toyo Seiki Seisaku-sho, Ltd. (D(mm) = 20, L/D = 20, compression ratio = 3.5, screw: full-flighted) under the following conditions, and the number of defects was evaluated.

Cylinder temperature: supply section: 150 °C, compression section: 172 °C, metering section: 172 °C
Die temperature: 172 °C
Screw rotation speed: 40 rpm
Discharge amount: 1.2 kg/hour
Take-up roll temperature: 80 °C
Take-up roll speed: 3.0 m/min
Film thickness: 20 µm

Here, in other Examples and Comparative Examples, the temperature conditions of the extruder were set as follows, depending on a melting point of the modified EVOH.
Supply section: 150 °C (120 °C for Example 11 and Comparative Example 7)
Compression section: a melting point of the modified EVOH + 20 °C
Metering section: a melting point of the modified EVOH + 20 °C
Die temperature: a melting point of the modified EVOH + 20 °C

30 minutes after the initiation of film production, a 10 cm x 10 cm film was sampled, and the number of hard spots of 100 µm or more was visually counted. Extrusion stability was determined based on the number of hard spots according to the following criteria. The results are shown in Table 3.
Classification: criteria
A: 50/100 cm² or less
B: more than 50/100 cm² and 100/100 cm² or less
C: more than 100/100 cm² and 200/100 cm² or less
D: more than 200/100 cm²

### (11) Evaluation of thermal stability

A single-layer film was formed from the pellets obtained in (3) for 8 hours as described in "(10) evaluation of extrusion stability" except that a die temperature was 250 °C, and then with a screw rotation speed being changed to 50 rpm, the inside of the extruder was purged (washing) with 500 g of a high-density polyethylene. Next, the die was disassembled and a thermally deteriorated resin adhering to the lip part was collected and weighed, to evaluate, long run property during processing (die lip deposition amount). The thermally deteriorated resin adhering to the lip part tends to cause gel and hard spots in a film obtained, and a small cumulative amount thereof means that melt molding can be stable for a long period. The results are shown in Table 3.

### (12) Production of a single-layer film

A single-layer molding was conducted from the pellets obtained in (3) using a 20 mm extruder "D2020" from Toyo Seiki Seisaku-sho, Ltd. (D(mm) = 20, L/D = 20, compression ratio = 3.5, screw: full-flighted) under the following conditions, to give a single-layer film.

Cylinder temperature: supply section: 170 °C, compression section: 200 °C, metering section: 200 °C
Die temperature: 200 °C
Screw rotation speed: 100 rpm
Discharge amount: 3.0 kg/hour
Take-up roll temperature: 80 °C
Take-up roll speed: 1.5 m/min
Film thickness: 100 µm

### (13) Evaluation of stretchability

The obtained single-layer film with a thickness of 100 µm was simultaneously biaxially stretched at 80°C at a stretching ratio of 3.75 x 3.75 times using a pantograph biaxial stretching device manufactured by Eto Co., Ltd., and stretchability was evaluated in accordance with the following criteria.
A: No stretching unevenness or local uneven thickness was observed in the film after stretching, and the appearance was good.
B: No tearing occurred in the film after stretching, but slight stretching unevenness or local uneven thickness occurred.
C: No tearing occurred in the film after stretching, but obvious stretching unevenness or local uneven thickness occurred in half or less of the total area.
D: No tearing occurred in the film after stretching, but uneven stretching or local uneven thickness occurred in more than half of the total area.
E: Stretching unevenness or local uneven thickness occurred over the entire surface of the film after stretching, and further the film was broken.

### (14) Evaluation of solubility

10 grams of the pellets obtained in (3) were added in 100 g of dimethyl sulfoxide, and the mixture was heated with stirring to 80 °C. After 1 hour, the solution was filtered using a No. 20 metal mesh (mesh opening: 0.98 mm), and then the insoluble matter was collected. A ratio of the insoluble matter (g) to 10 g of the pellets added to dimethyl sulfoxide was calculated and evaluated in accordance with the following criteria. The results are shown in Table 3.
A: Insoluble matter less than 1 %
B: Insoluble matter 1 % or more and less than 10 %
C: Insoluble matter 10 % or more

### Examples 2 to 13, 16, and Comparative Examples 1 to 2, 4, 7, 8

Pellets were produced and evaluated as described in Example 1, except that the type of an EVOH, and the type and a content of particles were changed. The results are shown in Tables 2 and 3. For all the pellets, a sodium element content was 150 ppm, a phosphoric acid compound content was 40 ppm in terms of a phosphate radical, and an acetic acid content was 100 ppm.

### Example 14

Pellets were produced and evaluated as described in Example 2, except that the amounts of water and methanol charged in producing a water-containing pellet were 37 parts by mass and 149 parts by mass, respectively. A sodium element content was 150 ppm, a phosphoric acid compound content was 40 ppm in terms of a phosphate radical, and an acetic acid content was 100 ppm. In the pellet obtained, recesses were formed in both cut surfaces having D/L of 0.22. The results are shown in Tables 2 and 3.

### Example 15

Pellets were produced and evaluated as described in Example 2, except that a solution in which 1 part by mass of the water-containing pellet was to be added in producing pellets was 18.5 parts by mass (bath ratio: 20) of an aqueous solution with a sodium acetate concentration of 0.5 g/L, an acetic acid concentration of 0.4 g/L, a phosphoric acid concentration of 0.05 g/L and a boric acid concentration of 0.2 g/L. The results are shown in Tables 2 and 3. For the pellets obtained, a sodium element content was 150 ppm, a phosphoric acid compound content was 40 ppm in terms of a phosphate radical, an acetic acid content was 100 ppm, and a boric acid content was 1000 ppm. A melt flow rate (MFR)(190 °C, under a load of 2160 g) of the modified EVOH obtained was 3.7 g/10 min.

### Example 17

Pellets were produced and evaluated as described in Example 2, except that the crude dried material of EVOH obtained in Synthesis Example 9 was used. The results are shown in Tables 2 and 3. For the pellets obtained, a sodium element content was 150 ppm, a phosphoric acid compound content was 40 ppm in terms of a phosphate radical, and an acetic acid content was 100 ppm.

### Example 18

Pellets were produced and evaluated as described in Example 2, except that 100 parts by mass of the crude dried material of EVOH obtained in Synthesis Example 10, 0.12 parts by mass of Sylysia 350 (manufactured by Fuji Silysia Chemical Ltd.), 70 parts by mass of water and 163 parts by mass of MeOH were charged to produce water-containing pellets. For the pellets obtained, a sodium element content was 150 ppm, a phosphoric acid compound content was 40 ppm in terms of a phosphate radical, and an acetic acid content was 100 ppm. The results are shown in Tables 2 and 3.

### Comparative Example 3

Pellets were produced by conducting (1) to (3) as described in Example 2, except that no particles were added. In accordance with (4) to (7), a melting point, a sodium element content, a phosphoric acid compound content and an acetic acid content were determined. A melting point was 152 °C, a sodium element content was 150 ppm, a phosphoric acid compound content was 40 ppm in terms of a phosphate radical, an acetic acid content was 100 ppm, and a melting enthalpy ΔHm was 55 (J/g). The cut surface of the pellet obtained was observed with an electron microscope in accordance with (8), and it was found that four recesses 5 were formed in the lateral surface of the pellets. Observation of the surface of the pellet with an electronic microscope showed that no projections were formed in the surface of the pellet. Furthermore, using the water-containing pellet after centrifugal dehydration obtained in "(3) Production of a pellet", blocking resistance during drying (9) was evaluated. The results are shown in Tables 2 and 3.

Subsequently, to 100 parts by mass of the pellets was added 0.12 parts by mass of Sylysia 350 (manufactured by Fuji Silysia Chemical Ltd.), and the mixture was mixed in a tumbler (manufactured by **NISSUI** KAKO) for 5 min such that these are well-blended. Next, the mixture thus obtained was introduced into the raw material supply section of a twin screw extruder at a rate of 10 kg/hr, and was kneaded at a resin temperature in the extruder of 250 °C and then extruded to give pellets containing particles. Using the pellets thus obtained, (10) to (14) were conducted to evaluate the pellets. The results are shown in Table 3.

Observation of the cut surface of the pellet after kneading by the twin screw extruder with an electronic microscope showed that no recesses were formed. Furthermore, observation of the surface of the pellet with an electronic microscope showed that no projections were formed in the surface of the pellet.

### Comparative Examples 5, 6

Pellets were produced and evaluated as described in Example 1, substituting molecular sieves 4A (manufactured by Union Showa Co., Ltd.) for particles added in production of water-containing pellets. Molecular sieves 4A were pulverized with a mixer such that they had an average particle size described in Tables 2 and 3. The results are shown in Table 2.

**[Table 1]**

| | Polymerization conditions | | | | | | | | | Modified EVOH | | |
|---|---|---|---|---|---|---|---|---|---|---|---|---|
| | Initial charge | | | | | | Polymerization temperature | Polymerization time | Final polymerization ratio | Content of a | Content of c | Degree of saponification (DS) |
| | Vinyl acetate | Methanol | Modifying agent | | Ethylene pressure | Initiator | | | | | | |
| | kg | kg | Type ¹⁾ | kg | MPa | g | °C | hour | % | mol% | mol% | mol% |
| Synthesis Example 1 | 90 | 9.0 | 1 | 1.9 | 5.8 | 72 | 60 | 6 | 40 | 44 | 1.5 | ≥99.9 |
| Synthesis Example 2 | 90 | 4.5 | 1 | 5.1 | 6.4 | 54 | 70 | 4 | 32 | 44 | 3.0 | ≥99.9 |
| Synthesis Example 3 | 60 | 3.00 | 1 | 1.3 | 6.9 | 81 | 70 | 6.5 | 39 | 50 | 1.5 | ≥99.9 |
| Synthesis Example 4 | 120 | 12 | 1 | 2.7 | 3.5 | 48 | 60 | 6.5 | 48 | 27 | 1.5 | ≥99.9 |
| Synthesis Example 5 | 120 | 6.00 | 1 | 10 | 3.8 | 84 | 60 | 10 | 9 | 27 | 8.0 | ≥99.9 |
| Synthesis Example 6 | 100 | 10 | 1 | 2.9 | 4.9 | 60 | 60 | 6 | 45 | 38 | 1.5 | ≥99.9 |
| Synthesis Example 7 | 110 | 5.5 | 2 | 8.7 | 4.3 | 88 | 60 | 9 | 35 | 32 | 3.0 | ≥99.9 |
| Synthesis Example 8 | 80 | 24 | | | 5.3 | 16 | 60 | 6.5 | 44 | 44 | - | ≥99.9 |
| Synthesis Example 9 | 90 | 18 | | | 6.4 | 20 | 60 | 6.5 | 46 | 50 | - | 95 |
| Synthesis Example 10 | 90 | 13.5 | | | 6.0 | 18 | 60 | 6 | 46 | 48 | - | ≥99.9 |

| | | | | | | | | | | | | |
|---|---|---|---|---|---|---|---|---|---|---|---|---|
| 1) Modifying agent 1: 2-methylene-1,3-propanediol diacetate, Modifying agent 2: 2-methylene-1,3-propanediol | | | | | | | | | | | | |

**[Table 2]**

| | EVOH | | | | | | | | Particle ³⁾ | | | |
|---|---|---|---|---|---|---|---|---|---|---|---|---|
| | Synthesis Example | a | Modifying agent¹⁾ | c | 1.2a+8c Formula (5) | DS²⁾ | Melting point | MFR 190 °C, load 2160 g | Type | Particle size | Content | Particle addition method ⁴⁾ |
| | | mol% | | mol% | | mol% | °C | g/10 min | | µm | ppm | |
| Example 1 | 1 | 44 | 1 | 1.5 | 64.8 | ≥99.9 | 152 | 6.0 | 1 | 2.7 | 1200 | Wet |
| Example 2 | 1 | 44 | 1 | 1.5 | 64.8 | ≥99.9 | 152 | 6.0 | 2 | 3.9 | 1200 | Wet |
| Example 3 | 1 | 44 | 1 | 1.5 | 64.8 | ≥99.9 | 152 | 6.0 | 3 | 6.4 | 1200 | Wet |
| Example 4 | 1 | 44 | 1 | 1.5 | 64.8 | ≥99.9 | 152 | 6.0 | 4 | 3.0 | 1200 | Wet |
| Example 5 | 1 | 44 | 1 | 1.5 | 64.8 | ≥99.9 | 152 | 6.0 | 5 | 25 | 1200 | Wet |
| Example 6 | 1 | 44 | 1 | 1.5 | 64.8 | ≥99.9 | 152 | 6.0 | 1 4 | 2.7 3.0 | 1200 1200 | Wet |
| Example 7 | 1 | 44 | 1 | 1.5 | 64.8 | ≥99.9 | 152 | 6.0 | 2 | 3.9 | 2400 | Wet |
| Example 8 | 2 | 44 | 1 | 3 | 76.8 | ≥99.9 | 134 | 5.6 | 2 | 3.9 | 1200 | Wet |
| Example 9 | 3 | 50 | 1 | 1.5 | 72.0 | ≥99.9 | 143 | 6.3 | 2 | 3.9 | 1200 | Wet |
| Example 10 | 4 | 27 | 1 | 1.5 | 44.4 | ≥99.9 | 178 | 4.5 | 2 | 3.9 | 1200 | Wet |
| Example 11 | 5 | 27 | 1 | 8 | 96.4 | ≥99.9 | 125 | 4.2 | 2 | 3.9 | 1200 | Wet |
| Example 12 | 6 | 38 | 1 | 1.5 | 57.6 | ≥99.9 | 161 | 5.5 | 2 | 3.9 | 1200 | Wet |
| Example 13 | 7 | 32 | 2 | 3 | 62.4 | ≥99.9 | 159 | 4.6 | 2 | 3.9 | 1200 | Wet |
| Example 14 | 1 | 44 | 1 | 1.5 | 64.8 | ≥99.9 | 152 | 6.0 | 2 | 3.9 | 1200 | Wet |
| Example 15 | 1 | 44 | 1 | 1.5 | 64.8 | ≥99.9 | 152 | 3.7 | 2 | 3.9 | 1200 | Wet |
| Example 16 | 1 | 44 | 1 | 1.5 | 64.8 | ≥99.9 | 152 | 3.7 | 6 | 1.1 | 200 | Wet |
| Example 17 | 9 | 50 | Unmodified | 0.0 | 60.0 | 95.0 | 143 | 6.1 | 2 | 3.9 | 1200 | Wet |
| Example 18 | 10 | 48 | Unmodified | 0.0 | 57.6 | ≥99.9 | 160 | 6.2 | 2 | 3.9 | 1200 | Wet |
| Comparative Example 1 | 8 | 44 | Unmodified | 0.0 | 52.8 | ≥99.9 | 165 | 5.2 | 2 | 3.9 | 1200 | Wet |
| Comparative Example 2 | 1 | 44 | 1 | 1.5 | 64.8 | ≥99.9 | 152 | 6.0 | - | - | - | - |
| Comparative Example 3 | 1 | 44 | 1 | 1.5 | 64.8 | ≥99.9 | 152 | 6.1 | 2 | 3.9 | 1200 | Dry |
| Comparative Example 4 | 1 | 44 | 1 | 1.5 | 64.8 | ≥99.9 | 152 | 6.0 | 2 | 3.9 | 6000 | Wet |
| Comparative Example 5 | 1 | 44 | 1 | 1.5 | 64.8 | ≥99.9 | 152 | 6.0 | 7 | 0.70 | 1200 | Wet |
| Comparative Example 6 | 1 | 44 | 1 | 1.5 | 64.8 | ≥99.9 | 152 | 6.0 | 7 | 55 | 1200 | Wet |
| Comparative Example 7 | 1 | 44 | 1 | 1.5 | 64.8 | 89.0 | 119 | 6.0 | 2 | 3.9 | 1200 | Wet |
| Comparative Example 8 | 8 | 44 | Unmodified | 0.0 | 52.8 | ≥99.9 | 165 | 5.2 | - | - | - | - |

| | | | | | | | | | | | | |
|---|---|---|---|---|---|---|---|---|---|---|---|---|
| 1) Modifying agent 1: 2-methylene-1,3-propanediol diacetate, Modifying agent 2: 2-methylene-1,3-propanediol 2) Degrees of saponification (DS) of Examples 1 to 16 and Comparative Examples 2 to 7 were determined using Formula (8). 3) Particle 1: Sylysia 310P (Fuji Silysia Chemical Ltd.), Particle 2: Sylysia 350 (Fuji Silysia Chemical Ltd.), Particle 3: Sylysia 370 (Fuji Silysia Chemical Ltd.), Particle 4: ALFLOW H-50UF (NOF Corporation), Particle 5:ALFLOW H-50P (NOF Corporation), Particle 6: Zirconium oxide (Nippon Denko Co., Ltd.), Particle 7: Molecular Sieves 4A (Union Showa K. K.); Particle size (average particle size R, median diameter) was measured by light scattering technique for a circulating dispersion prepared by dispersing the particles in water and thoroughly stirring the mixture. 4) Wet: A modified EVOH, particles, water and methanol were charged and the mixture was heated to give a solution, which was used to produce a strand. Dry: A modified EVOH and particles were melt-kneaded with an extruder, to give pellets. | | | | | | | | | | | | |

**[Table 3]**

| | Recess (lateral surface) | | Projection | | Di(mm)/ L(mm) | ΔHm | ΔHm/100 +A/500 Formula (6) | H/R Formula (7) | Blocking resistance | | | Extrusion stability | Die lip deposition amount | Stretchability | Solubility |
|---|---|---|---|---|---|---|---|---|---|---|---|---|---|---|---|
| | Formula (1) Left-hand side | n | Number | H | | | | | Temperature (°C) | | | | | | |
| | | number | number/mm² | µm | | J/g | | | 70 | 90 | 110 | | mg | | |
| Example 1 | 0.49 | 4 | 1459 | 0.48 | 3.0/4.1 | 55 | 2.95 | 0.18 | B | B | A | A | 0.036 | A | A |
| Example 2 | 0.49 | 4 | 698 | 0.58 | 3.0/4.0 | 55 | 2.95 | 0.15 | A | A | A | A | 0.041 | A | A |
| Example 3 | 0.49 | 4 | 258 | 1.6 | 2.9/3.9 | 55 | 2.95 | 0.25 | A | A | A | B | 0.042 | A | A |
| Example 4 | 0.49 | 4 | 1181 | 0.55 | 2.9/4.0 | 55 | 2.95 | 0.18 | B | B | A | A | 0.062 | A | A |
| Example 5 | 0.49 | 4 | 17 | 2.5 | 3.0/4.0 | 55 | 2.95 | 0.10 | B | A | A | A | 0.059 | A | A |
| Example 6 | 0.49 | 4 | 2482 | 0.52 | 3.0/4.1 | 55 | 5.35 | 0.16 | A | A | A | A | 0.039 | A | A |
| Example 7 | 0.49 | 4 | 1327 | 0.51 | 3.1/4.0 | 55 | 5.35 | 0.13 | A | A | A | C | 0.031 | B | A |
| Example 8 | 0.44 | 4 | 873 | 0.64 | 2.9/4.0 | 42 | 2.82 | 0.16 | A | B | B | A | 0.038 | A | A |
| Example 9 | 0.42 | 4 | 782 | 0.61 | 2.9/3.9 | 53 | 2.93 | 0.16 | A | A | B | A | 0.035 | A | A |
| Example 10 | 0.59 | 4 | 543 | 0.56 | 3.0/4.0 | 64 | 3.04 | 0.14 | A | A | A | A | 0.061 | A | A |
| Example 11 | 0.39 | 4 | 817 | 0.68 | 2.9/4.0 | 0 | 2.4 | 0.17 | B | B | B | A | 0.058 | A | A |
| Example 12 | 0.47 | 4 | 575 | 0.62 | 3.0/4.1 | 62 | 3.02 | 0.16 | A | A | A | A | 0.043 | A | A |
| Example 13 | 0.43 | 4 | 623 | 0.59 | 2.9/4.0 | 45 | 2.85 | 0.15 | A | A | A | A | 0.049 | A | A |
| Example 14 | - | - | 512 | 0.53 | 3.2/2.9 | 55 | 2.95 | 0.14 | A | A | A | A | 0.039 | A | A |
| Example 15 | 0.49 | 4 | 716 | 0.58 | 3.0/3.9 | 55 | 2.95 | 0.15 | A | A | A | A | 0.040 | A | A |
| Example 16 | 0.49 | 4 | 8804 | 0.19 | 3.0/4.1 | 55 | 0.95 | 0.17 | B | B | B | A | 0.076 | A | A |
| Example 17 | 0.47 | 4 | 648 | 0.54 | 2.9/4.1 | 17 | 2.57 | 0.17 | B | B | B | A | 0.045 | B | A |
| Example 18 | 0.71 | 4 | 426 | 0.31 | 3.1/4.0 | 53 | 2.93 | 0.15 | A | A | B | A | 0.044 | C | B |
| Comparative Example 1 | - | - | 528 | 0.22 | 3.0/4.0 | 66 | 3.06 | 0.06 | A | A | A | D | 0.042 | E | B |
| Comparative Example 2 | 0.49 | 4 | - | - | 3.0/4.1 | 55 | - | - | B | C | C | A | 0.082 | A | A |
| Comparative Example 3 | 0.49 | 4 | - | - | 3.0/4.0 | 55 | 2.95 | - | B | C | C | A | 0.042 | A | C |
| Comparative Example 4 | 0.49 | 4 | 3628 | 0.58 | 3.0/3.9 | 55 | 12.55 | 0.15 | A | A | A | A | 0.024 | D | A |
| Comparative Example 5 | 0.49 | 4 | 21752 | 0.13 | 2.9/4.0 | 55 | 2.95 | 0.19 | C | C | B | A | 0.049 | A | A |
| Comparative Example 6 | 0.49 | 4 | 4 | 18 | 3.1/4.0 | 55 | 2.95 | 0.33 | A | A | A | A | 0.028 | E | A |
| Comparative Example 7 | 0.49 | 4 | 532 | 0.54 | 2.8/4.0 | 55 | 2.95 | 0.14 | C | C | C | A | 0.035 | A | A |
| Comparative Example 8 | - | - | - | - | 3.0/4.0 | 66 | - | - | A | A | A | D | 0.081 | E | B |

### DESCRIPTION OF SYMBOLS

1: Pellet
2: Lateral surface
3: Flow direction
4: Cross-section
5, 11: Recess
6: Gravity center of the pellet
7: Gravity center of the cross-section
8: Edge
9: Bottom
10: Cut surface

## Claims

1. A pellet containing an ethylene-vinyl alcohol copolymer having a degree of saponification of 90 mol% or more and particles, which is cut into a cylindrical shape, wherein
the pellet has a melting enthalpy ΔHm (J/g) of 65 (J/g) or less;
the pellet contains 5 ppm to 5,000 ppm of particles with an average particle size R of 1 µm to 30 µm;
the pellet has a length L (mm);
recesses are formed in the lateral surface or the cut surface of the pellet; in cases where the recesses are formed in the lateral surface, the number n of the recesses is 2 to 5; at least in one cross-section perpendicular to a flow direction of the pellet positioned within L/4 (mm) from the gravity center of the pellet, distances α1 to αn respectively from the gravity center of the cross-section to the edges of the recesses formed in the lateral surface and distances β1 to βn respectively from the gravity center of the cross-section to the bottoms of the recesses formed in the lateral surface satisfy Formula (1): $\left(β1+β2⋯+βn\right) / \left(α1+α2⋯+αn\right) \leq 0.8$
in cases where the recesses are formed in the cut surface, a ratio D/L of a depth D (mm) of the recesses formed in the cut surface to a length L (mm) of the pellet is 0.1 or more;
a projection having a height H of 0.1 µm to 15 µm is formed on the surface of the pellet;
the projection contains the particles and the particles are covered with the ethylene-vinyl alcohol copolymer and wherein the ΔHm, the average particle size R and the pellet shape (H, L, D, β, α...) are determined by the methods mentioned in the specification.

2. The pellet according to Claim 1, wherein the melting enthalpy ΔHm (J/g) of the pellet is 64 (J/g) or less.

3. The pellet according to Claim 1 or 2, wherein the ethylene-vinyl alcohol copolymer is represented by Formula (I): 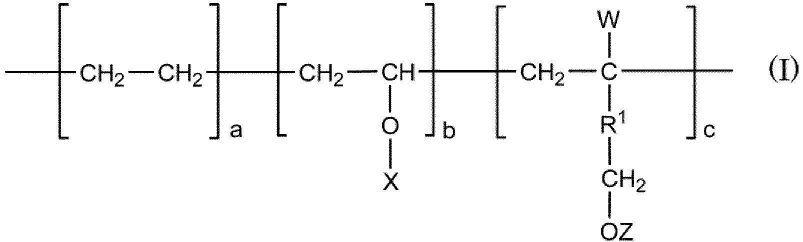
wherein W represents a hydrogen atom, a methyl group or a group represented by R²-OY; X, Y and Z are each independently a hydrogen atom, a formyl group or an alkanoyl group having 2 to 10 carbon atoms; R¹ and R² represent each independently a single bond, an alkylene group having 1 to 9 carbon atoms or an alkyleneoxy group having 1 to 9 carbon atoms; the alkylene group and the alkyleneoxy group can contain a hydroxy group, an alkoxy group or a halogen atom; and
contents (mol%) of a, b and c based on the total monomer units satisfy Formulas (2) to (4): $24 \leq a \leq 55$ $0.01 \leq c \leq 10$ $\left[100-\left(a+c\right)\right] \times 0.9 \leq b \leq \left[100-\left(a+c\right)\right]$

4. The pellet according to Claim 3, wherein in Formula (I), a and c satisfy Formula (5). $29 \leq 1.2 a + 8 c \leq 100$

5. The pellet according to Claim 3 or 4, wherein in Formula (I), R¹ is a single bond and W is a hydroxymethyl group.

6. The pellet according to any one of Claims 1 to 5, wherein the melting enthalpy ΔHm (J/g) of the pellet and a content A (ppm) of the particles satisfy Formula (6). $1 \leq ΔHm / 100 + A / 500 \leq 10$

7. The pellet according to any one of Claims 1 to 6, wherein the average particle size R (µm) of the particles and the height H (µm) of the projection satisfy Formula (7). $0.1 \leq H / R \leq 0.9$

8. The pellet according to any one of Claims 1 to 7, wherein the particles are inorganic oxide particles.

9. The pellet according to Claim 8, wherein the inorganic oxide particles are silicon oxide particles or metal oxide particles.

10. The pellet according to any one of Claims 1 to 7, wherein the particles are organic compound particles made of at least one selected from the group consisting of a saturated fatty acid amide, an unsaturated fatty acid amide, a bis-fatty acid amide and a fatty acid metal salt.

11. A method for producing the pellet according to any one of Claims 1 to 10, comprising the step of cutting a strand containing the ethylene-vinyl alcohol copolymer, the particles and water to give a cylindrical water-containing pellet; and the step of drying the water-containing pellet to form the recesses.

## Patentansprüche

1. Pellet, das ein Ethylen-Vinylalkohol-Copolymer, welches einen Verseifungsgrad von 90 Mol-% oder mehr aufweist, und Teilchen enthält und in eine zylindrische Form geschnitten ist, wobei
das Pellet eine Schmelzenthalpie ΔHm (J/g) von 65 (J/g) oder weniger aufweist; das Pellet 5 ppm bis 5.000 ppm an Teilchen mit einer durchschnittlichen Teilchengröße R von 1 µm bis 30 µm enthält;
das Pellet eine Länge L (mm) aufweist;
in der Seitenfläche oder der Schnittfläche des Pellets Vertiefungen ausgebildet sind;
in Fällen, in denen die Vertiefungen in der Seitenfläche ausgebildet sind, die Anzahl n der Vertiefungen 2 bis 5 beträgt; mindestens in einem Querschnitt senkrecht zu einer Fließrichtung des Pellets, der innerhalb eines Abstands von L/4 (mm) von dem Schwerpunkt des Pellets entfernt angeordnet ist, Abstände α1 bis αn jeweils von dem Schwerpunkt des Querschnitts zu den Rändern der in der Seitenfläche ausgebildeten Vertiefungen und Abstände β1 bis βn jeweils von dem Schwerpunkt des Querschnitts zu den Böden der in der Seitenfläche ausgebildeten Vertiefungen die Formel (1) erfüllen: $\left(β1+β2⋯+βn\right) / \left(α1+α2 ⋯+αn\right) \leq 0 , 8$
in Fällen, in denen die Vertiefungen in der Schnittfläche ausgebildet sind, ein Verhältnis D/L einer Tiefe D (mm) der in der Schnittfläche ausgebildeten Vertiefungen einer Länge L (mm) des Pellets 0,1 oder mehr beträgt;
eine Erhebung mit einer Höhe H von 0,1 µm bis 15 µm auf der Oberfläche des Pellets ist ausgebildet;
die Erhebung die Teilchen enthält und die Teilchen mit dem Ethylen-Vinylalkohol-Copolymer überzogen sind, wobei
die ΔHm, die durchschnittliche Teilchengröße R und die Pelletform (H, L, D, β, α ...) durch die in der Beschreibung gegebenen Verfahren bestimmt werden.

2. Pellet nach Anspruch 1, wobei die Schmelzenthalpie ΔHm (J/g) des Pellets 64 (J/g) oder weniger beträgt.

3. Pellet nach Anspruch 1 oder 2, wobei das Ethylen-Vinylalkohol-Copolymer durch die Formel (I) dargestellt wird: 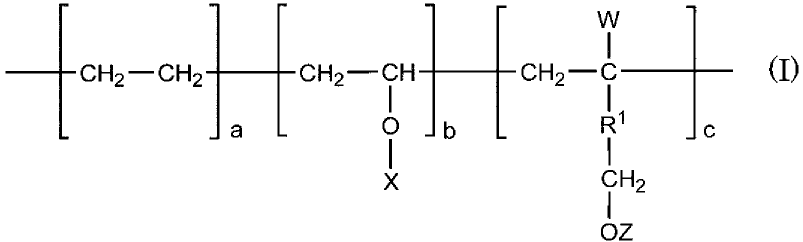
wobei W ein Wasserstoffatom, eine Methylgruppe oder eine durch R²-OY dargestellte Gruppe darstellt; X, Y und Z jeweils unabhängig voneinander ein Wasserstoffatom, eine Formylgruppe oder eine Alkanoylgruppe mit 2 bis 10 Kohlenstoffatomen sind; R¹ und R² jeweils unabhängig voneinander eine Einfachbindung, eine Alkylengruppe mit 1 bis 9 Kohlenstoffatomen oder eine Alkylenoxygruppe mit 1 bis 9 Kohlenstoffatomen darstellen; wobei die Alkylengruppe und die Alkylenoxygruppe eine Hydroxygruppe, eine Alkoxygruppe oder ein Halogenatom enthalten können; und
Gehalte (mol%) von a, b und c, basierend auf den gesamten Monomereinheiten, die Formeln (2) bis (4) erfüllen: $24 \leq a \leq 55$ $0 , 01 \leq c \leq 10$ $\left[100-\left(a+c\right)\right] \times 0 , 9 \leq b \leq \left[100-\left(a+c\right)\right]$

4. Pellet nach Anspruch 3, wobei in Formel (I) a und c Formel (5) erfüllen. $29 \leq 1 , 2 a + 8 c \leq 100$

5. Pellet nach Anspruch 3 oder 4, wobei in Formel (I) R¹ eine Einfachbindung und W eine Hydroxymethylgruppe ist.

6. Pellet nach einem der Ansprüche 1 bis 5, wobei die Schmelzenthalpie ΔHm (J/g) des Pellets und ein Gehalt A (ppm) der Teilchen Formel (6) erfüllen. $1 \leq ΔHm / 100 + A / 500 \leq 10$

7. Pellet nach einem der Ansprüche 1 bis 6, wobei die durchschnittliche Teilchengröße R (µm) der Teilchen und die Höhe H (µm) der Erhebung Formel (7) erfüllen. $0 , 1 \leq H / R \leq 0 , 9$

8. Pellet nach einem der Ansprüche 1 bis 7, wobei die Teilchen anorganische Oxidteilchen sind.

9. Pellet nach Anspruch 8, wobei die anorganischen Oxidteilchen Siliziumoxidteilchen oder Metalloxidteilchen sind.

10. Pellet nach einem der Ansprüche 1 bis 7, wobei die Teilchen Teilchen einer organischen Verbindung sind, die aus mindestens einer Verbindung, ausgewählt aus der Gruppe, bestehend aus einem gesättigten Fettsäureamid, einem ungesättigten Fettsäureamid, einem Bis-Fettsäureamid und einem Fettsäuremetallsalz, bestehen.

11. Verfahren zur Herstellung des Pellets nach einem der Ansprüche 1 bis 10, umfassend den Schritt des Schneidens eines Strangs, enthaltend das Ethylen-Vinylalkohol-Copolymer, die Teilchen und Wasser, um ein zylindrisches, wasserenthaltendes Pellet zu erhalten; und den Schritt des Trocknens des wasserenthaltenden Pellets, um die Vertiefungen zu bilden.

## Revendications

1. Granulé contenant un copolymère d'éthylène-alcool vinylique ayant un degré de saponification de 90 % en mol ou plus et des particules, qui est découpé en une forme cylindrique, dans lequel
le granulé a une enthalpie de fusion ΔHm (J/g) de 65 (J/g) ou moins ;
le granulé contient 5 ppm à 5000 ppm de particules avec une taille particulaire moyenne R de 1 µm à 30 µm ;
le granulé a une longueur L (mm) ;
des retraits sont formés dans la surface latérale ou la surface découpée du granulé ;
dans des cas où les retraits sont formés dans la surface latérale, le nombre n des retraits est de 2 à 5 ; au moins dans une section transversale perpendiculaire à une direction d'écoulement du granulé positionné dans un rayon de L/4 (mm) du centre de gravité du granulé, des distances α1 à αn respectivement du centre de gravité de la section transversale aux bords des retraits formés dans la surface latérale et des distances β1 à βn respectivement du centre de gravité de la section transversale aux fonds des retraits formés dans la surface latérale satisfont la Formule (1) : $\left(β1+β2…+βn\right) / \left(α1+α2…+αn\right) \leq 0 , 8$
dans des cas où les retraits sont formés dans la surface découpée, un rapport D/L d'une profondeur D (mm) des retraits formés dans la surface découpée sur une longueur L (mm) du granulé est de 0,1 ou plus ;
une saillie ayant une hauteur H de 0,1 µm à 15 µm est formée sur la surface du granulé ;
la saillie contient les particules et les particules sont recouvertes du copolymère d'éthylène-alcool vinylique, et dans lequel la ΔHm, la taille particulaire moyenne R et la forme de granulé (H, L, D, β, α...) sont déterminés par les procédés mentionnés dans la spécification.

2. Granulé selon la revendication 1, dans lequel l'enthalpie de fusion ΔHm (J/g) du granulé est de 64 (J/g) ou moins.

3. Granulé selon la revendication 1 ou 2, dans lequel le copolymère d'éthylène-alcool vinylique est représenté par la Formule (I) : 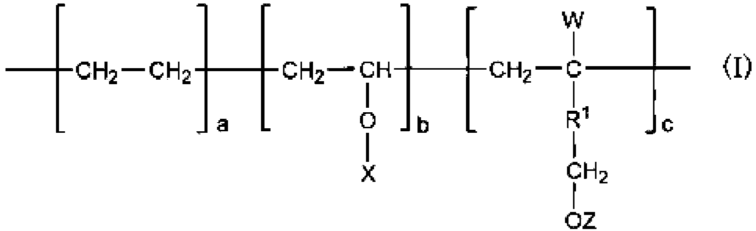
dans laquelle W représente un atome d'hydrogène, un groupe méthyle ou un groupe représenté par R²-OY ; X, Y et Z sont chacun indépendamment un atome d'hydrogène, un groupe formyle ou un groupe alcanoyle ayant 2 à 10 atomes de carbone ; R¹ et R² représentent chacun indépendamment une liaison simple, un groupe alkylène ayant 1 à 9 atomes de carbone ou un groupe alkylèneoxy ayant 1 à 9 atomes de carbone ; le groupe alkylène et le groupe alkylèneoxy peuvent contenir un groupe hydroxy, un groupe alcoxy ou un atome d'halogène ; et
les teneurs (% en mol) de a, b et c basées sur les unités monomères totales satisfont les Formules (2) à (4) : $24 \leq a \leq 55$ $0 , 01 \leq c \leq 10$ $\left[100-\left(a+c\right)\right] x 0 , 9 \leq b \leq \left[100-\left(a+c\right)\right]$

4. Granulé selon la revendication 3, dans lequel dans la Formule (I), a et c satisfont la Formule (5). $29 \leq 1 , 2 a + 8 c \leq 100$

5. Granulé selon la revendication 3 ou 4, dans lequel dans la Formule (I), R¹ est une liaison simple et W est un groupe hydroxyméthyle.

6. Granulé selon l'une quelconque des revendications 1 à 5, dans lequel l'enthalpie de fusion ΔHm (J/g) du granulé et une teneur A (ppm) en les particules satisfont la Formule (6). $1 \leq ΔHm / 100 + A / 500 \leq 10$

7. Granulé selon l'une quelconque des revendications 1 à 6, dans lequel la taille particulaire moyenne R (µm) des particules et la hauteur H (µm) de la saillie satisfont la Formule (7). $0 , 1 \leq H / R \leq 0 , 9$

8. Granulé selon l'une quelconque des revendications 1 à 7, dans lequel les particules sont des particules d'oxyde inorganique.

9. Granulé selon la revendication 8, dans lequel les particules d'oxyde inorganique sont des particules d'oxyde de silicium ou des particules d'oxyde métallique.

10. Granulé selon l'une quelconque des revendications 1 à 7, dans lequel les particules sont des particules de composé organique réalisées en au moins un composé sélectionné parmi le groupe constitué d'un amide d'acide gras saturé, d'un amide d'acide gras insaturé, d'un amide d'acide bis-gras et d'un sel métallique d'acide gras.

11. Procédé de production du granulé selon l'une quelconque des revendications 1 à 10, comprenant l'étape de découpe d'un brin contenant le copolymère d'éthylène-alcool vinylique, les particules et de l'eau pour donner un granulé cylindrique contenant de l'eau ; et l'étape de séchage du granulé contenant de l'eau pour former les retraits.
